# EUROPEAN PATENT APPLICATION

(11) **EP 4 793 844 A1**
(43) Date of publication of application: **19.08.2026**
(21) Application number: 26157301.8
(22) Date of filing: 09.02.2026
(51) Int. Cl.: G06N 20/00

(54) **SYSTEMS AND METHODS FOR IMPROVING PROMPT VERSIONING IN SUPERVISED FINE-TUNING PROCESSES**

(30) Priority: 14.02.2025 US 202519054726; 14.02.2025 US 202519054734; 14.02.2025 US 202519054720
(71) Applicant: Capital One Services, LLC, McLean, Virginia 22102 (US)
(72) Inventor: ZHU, Chenyang, McLean, VA 22102 (US); KUMAR, Anoop, McLean, VA 22102 (US); LIU, Daben, McLean, VA 22102 (US); BABINSKY, Erin, McLean, VA 22102 (US); WOLFE, Nathan, McLean, VA 22102 (US); SAMUEL, Alfy, McLean, VA 22102 (US)
(74) Representative: Boult Wade Tennant LLP

(57) **Abstract**

Methods and systems are described herein for managing prompts used for executing and evaluating supervised fine tuning (SFT) processes. For example, a model identifier and a first description of a first computing task may be extracted from a first request to execute an SFT process to perform the first computing task. A candidate prompt template and associated metadata including a candidate prompt name may be generated, and the candidate prompt template may be uploaded to a prompt database with the associated metadata. A second request to execute an SFT process indicating the candidate prompt name may be received. The candidate prompt template may be used to execute the SFT process on a large language model associated with the second request, resulting in a trained first large language model. The trained first large language model may be evaluated using a test data set and the candidate prompt template.

## Description

### BACKGROUND

Large Language Models (LLMs) have transformed natural language process by demonstrating exceptional ability to generate and understand human language. An LLM may generate a response to a provided query. When responding to queries, the LLM may also receive instructions on how to formulate the response. LLMs are typically trained on diverse datasets covering a wide range of subjects, providing the necessary context to generate responses across various topics and in various styles. However, this versatility can lead to many LLMs not performing optimally on specialized tasks.

### SUMMARY

Described herein are techniques for fine tuning a large language model to respond to user questions related to a specific topic. Supervised fine-tuning (SFT) can be applied to an existing large language model to tailor it for particular tasks. The methods and systems described may provide improved techniques for standardizing prompt templates used in the SFT process. This creates practical technical advantages, for example, improving efficiency of SFT training processes.

SFT has emerged as a useful process for improving the task-specific performance of a pre-trained LLM. This process starts with a pre-trained model that has been trained on an extensive dataset of generalized language in an unsupervised manner. SFT involves training the pre-trained model using a dataset tailored to a specific task, which includes labeled examples to guide the learning process. During this training, the model's performance is continually evaluated against a validation set to ensure that it effectively adapts to the nuances of the task while avoiding overfitting.

However, SFT processes face a range of issues. For example, to effectively fine-tune the pre-trained model for a specific task, the tailored data set must consist of large quantities of high-quality data. Using low quality and/or low quantities of data may result in overfitting the model to noisy data, introduction of biases, degraded model accuracy, and other suboptimal outcomes. As another example, the SFT process may face issues while training the model with the tailored data set such as catastrophic forgetting of knowledge acquired during pre-training, amplification of bias present in the tailored data set, or other issues. It may therefore be essential to evaluate the performance of fine-tuned models to ensure that the described issues are not emerging during training.

Accurately evaluating the performance of a fine-tuned model may also require large data resources including robust validation data sets and evaluation metrics. Furthermore, the SFT process may be sensitive to variations in resources used to fine-tune and evaluate the model. Small variations in resources such as the tailored data set and evaluation metrics may influence on the fine-tuned model and its evaluation. This may make it difficult to replicate previous results or collaborate on fine-tuning the model. Addressing these challenges may involve utilizing a system with the capacity to efficiently manage resources such as large data sets used during fine-tuning and evaluation to provide consistent access to high-quality training and evaluation resources.

Large language models are extremely sensitive to small variations in inputs. For example, small variations in a prompt, such as small variations in punctuation, word choice, etc., may have a strong impact on the LLM's output. It is therefore important that the same prompt is used during both training and evaluation, particularly when comparing the effect of variables (e.g., hyperparameter values, hyperparameter quantity, LLM type, etc.) on the LLM's performance. Using different prompts can lead to overuse of network resources training and evaluating the LLM, inconsistency in LLM performance results, downstream errors in LLM outputs due to improper training/evaluating, and other issues. The system described herein solves these and other technical problems by generating and using a universal prompt database, from which users may select prompt templates, for both SFT execution and post-SFT evaluation. By allowing users to select prompts from a universal database that will be used for both SFT and evaluation, more consistent output may be created from different executions and evaluations. Additionally, model updates including errors or problems can be more easily, accurately, and quickly identified.

After fine-tuning the model through the SFT process, the fine-tuned model can be evaluated by one or more evaluation metrics. The set of metrics may use a variety of methods to analyze output from a fine-tuned large language model, such as analyzing model output through another model. For evaluation metrics that utilize models, the version and hyperparameter selections of the evaluation model will have a strong impact on the evaluation score. Evaluations using different versions of evaluation models may lack comparability, and therefore lack utility. The system described herein provides a streamlined pipeline where users may make selections associated with the request for evaluation from standardized options, therefore improving the utility and repeatability of evaluation results. Furthermore, evaluation results and associated selections (e.g. the prompt template, set of evaluation metrics, and/or the like) may be shared with all users of the system, thereby facilitating repeatability and collaboration.

While open-source repositories exist for at least some components of the SFT process, they lack the ability to consolidate the entire SFT pipeline and associated repositories into one system that allows users to execute SFT processes efficiently in a manner that is easily replicable. The system described integrates repositories with possible selection associated with the SFT process to a training and/or execution system, facilitating the users' ability to choose selections for an SFT process, record these selections, and generate results comparable to those of past requests to execute and/or evaluate an SFT process. In some embodiments of the described system, the user can submit a single request that initiates the complete process of evaluation and execution. For requests, the user can pull selections from a set of standardized repositories, minimizing unnecessary variation caused by inconsistent selection criteria. By virtue of integrating these standardized repositories into the system, the influence of unintended variable fluctuations (e.g. in prompt templates, evaluation metrics, and/or the like) may be reduced. Furthermore, the described system creates a streamlined means for submitting the requests and facilitates a user's ability to record requests and view details associated with past requests.

The system may increase the efficiency of executing and/or evaluating the SFT process by decreasing unintended variable fluctuations. Unexpected results caused by unintended variable fluctuations may require a user to repeatedly execute an SFT process, possibly multiple times, to replicate a previously obtained result. Each execution of the SFT process may take several hours and can be very computationally demanding. The system described herein can therefore improve the efficiency of executing and evaluating SFT process by increasing replicability. This may reduce the need to execute additional SFT processes, thereby saving time and computational resources. Furthermore, unintended variable fluctuations may result in decreased accuracy of the SFT process. For example, the unintended variable fluctuations may reinforce undesired patterns or incorrect predictions. Additionally, unexpected results may make it difficult to further refine (e.g., increase the accuracy of) previous executions of the SFT process. The system may therefore also improve the accuracy of executing and evaluating the SFT process by decreasing unintended variable fluctuations.

In some embodiments, unintended variable fluctuations may make it difficult for users to collaborate and further refine previous executions of the SFT process executed by their peers. In these embodiments, the lack of collaboration may further reduce the accuracy of the SFT process, since collaboration between at least two users typically yields better results than a single user would produce. For instance, two users may adopt different strategies for fine-tuning the model, potentially mitigating overfitting. Additionally, collaboration enables one user to identify errors or inconsistencies, such as mislabeled data or anomalous model behavior, that might be overlooked by another. Furthermore, collaboration facilitates the integration of diverse expertise, such as one user specializing in model training and another in model evaluation. Overall, this can enhance model accuracy by reducing overfitting, improving error detection, and leveraging the combined expertise of users. However, if executions of the SFT process have confusing results caused by unintended variable fluctuations (e.g., different versions of a prompt template, different training data sets, and/or the like) it may hinder effective collaboration between users to enhance the accuracy of the SFT process. The system may therefore also increase the accuracy and performance of the large language model by facilitating collaboration by allowing users to pull selections associated with the SFT process from the same standardized options and easily record and view selections associated with pasts requests of another user.

In some embodiments, the techniques described herein relate to a system for managing prompts used for executing supervised fine tuning (SFT) processes and evaluation of large language models by implementing a universal prompt database accessed during execution of the SFT process and the evaluation of large language models. In some examples, the system may include a cloud-based memory configured to store a prompt database including a plurality of prompt templates and prompt metadata. In an example, each prompt template of the plurality of prompt templates may include a prompt name used to call the prompt template and a prompt description of a computing task to be performed by a large language model. In some examples, the system may include a cloud-based control circuitry configured to receive a first request to execute a supervised fine tuning (SFT) process to train and evaluate a first instance of a first large language model to perform a first computing task.

In some embodiments, the system may extract, from the first request, a model identifier of the first large language model and a first description of the first computing task to be performed by the first instance of the first large language model after the SFT process has been executed. In some examples, the system may generate (i) a candidate prompt template to add to the plurality of prompt templates stored by the prompt database and (ii) candidate prompt metadata associated with the candidate prompt template. In an example, the candidate prompt metadata may include a candidate prompt name, the model identifier, and the first description. In some examples, the system may update the plurality of prompt templates stored by the prompt database to include the candidate prompt template and the candidate prompt metadata.

In some embodiments, the system may receive a second request to execute the SFT process to train and evaluate a second instance of the first large language model to perform a second computing task. In an example, the second request may include (a) the candidate prompt name, (b) a training data set including a plurality of training samples to be used with the candidate prompt template to execute the SFT process for the second instance of the first large language model, (c) a test data set including a plurality of testing samples The request may also include a set of evaluation metrics to be used with the candidate prompt template to evaluate a performance of the second instance of the first large language model after execution of the SFT process. In some examples, the system may execute the SFT process to train the second instance of the first large language model using the training data set and the candidate prompt template to obtain a trained first large language model. In some examples, cloud-based I/O circuitry configured to display a set of evaluation result metrics associated with the set of evaluation metrics determined using the trained first large language model and the training data set.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative system of a client device interacting with a model, in accordance with one or more embodiments.
FIG. 2 shows an illustrative diagram of a system for facilitating supervised fine-tuning training and evaluation of large language models using a prompt library servicing the supervised fine-tuning training and the evaluation of the large language models, in accordance with one or more embodiments.
FIG. 3 shows illustrative diagram of a prompt database, in accordance with one or more embodiments.
FIG. 4 shows an illustrative diagram of graphical user interface of configurations for performing an SFT process, in accordance with one or more embodiments.
FIG. 5 shows illustrative diagram of data sets associated with training and evaluating an LLM during an SFT process, in accordance with one or more embodiments.
FIGS. 6A-6B show illustrative diagrams of graphical user interfaces for displaying model evaluation results, in accordance with one or more embodiments.
FIG. 7 shows illustrative components for a system used to for facilitating supervised fine-tuning training and evaluation of large language models using a prompt library servicing the supervised fine-tuning training and the evaluation of the large language models, in accordance with one or more embodiments.
FIG. 8 shows a flowchart of the steps involved in facilitating supervised fine-tuning training and evaluation of large language models using a prompt library servicing the supervised fine-tuning training and the evaluation of the large language models, in accordance with one or more embodiments.
FIG. 9 shows a flowchart of the steps involved in generating prompt templates used to optimize an SFT process and evaluate of models trained using the SFT process, in accordance with one or more embodiments.
FIG. 10 shows a flowchart of the steps involved in evaluating the performance of a trained large language model, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

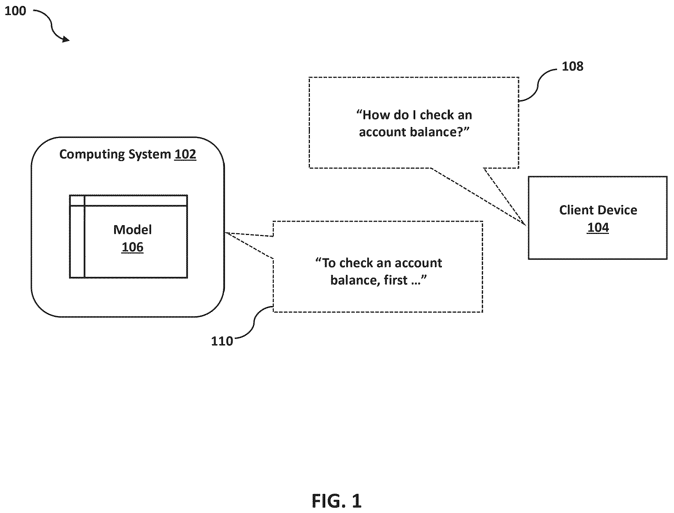

FIG. 1 shows an illustrative system 100 of a client device interacting with a model, in accordance with one or more embodiments. For example, system 100 of FIG. 1 shows a computing system 102 and a client device 104. Although a single instance of computing system 102 and client device 104 are shown in system 100, additional instances of computing system 102, client device 104, or other components, can be included in system 100. In some embodiments, computing system 102 may store, host, and facilitate access to (e.g., via one or more application programming interfaces (APIs)), a model 106. Model 106 may be a trained artificial intelligence model, such as a large language model (LLM). Model 106 may be trained using computing system 102. Model 106 may alternatively be pre-trained. In some examples, model 106 may be a pre-trained LLM that will have a supervised fine tuning (SFT) process executed to train the LLM to perform one or more tasks (e.g., generate text, generate images, generate video, perform a computing task, block an action, etc.).

Client device 104 may transmit a prompt 108 or data representing prompt 108 to computing system 102. For example, client device 104 (e.g., mobile device, desktop, and/or the like) may transmit prompt 108 based on receiving one or more inputs detected by client device 104. These inputs may include inputs detected via a user interface (e.g., mobile application, web interface, and/or the like) rendered via a display screen of client device 104. Prompt 108 may include a string of text representing a sentence, phrase, term, or other character string. For example, prompt 108 may include a string of text representing a question (e.g., "How do I check my account balance?"). As another example, prompt 108 may include a string of text representing an instruction (e.g., "Tell me how to bake a chocolate cake"). In some examples, prompt 108 may be generated by client device 104 in response to receiving one or more inputs. Client device 104 may capture image data, video data, audio data, biometric data, or other data, which can be used to generate prompt 108 or data representing prompt 108. For example, a user can speak an utterance into a microphone of client device 104, which can convert the audio signals into text representing prompt 108. In response to receiving prompt 108, computing system 102 may provide prompt 108 to model 106 to cause model 106 to generate a response 110 (or data representing response 110). In some examples, response 110, or the data representing response 110, may include text data (e.g., "To check an account balance, first ..."), image data (e.g., a picture of instructions for checking an account balance), video data (e.g., an instructional video for how to check an account balance, or a link thereto), or other data, or combinations thereof.

In some embodiments, model 106 may be a generative model. For example, model 106 may be a Retrieval Augmented Generated (RAG) model configured to access one or more resources to retrieve documentation relevant to a prompt and use the retrieved documentation to engineer the prompt to produce a better and more contextually relevant response. The model 106 may access document repositories within, or external to, computing system 102 to retrieve documentation relevant to prompt 108. Model 106 may generate a response (e.g., response 110 responding to prompt 108) based on the relevant documentation retrieved. As an example, in response to the question "What is the fee for ATM withdrawals?", model 106 may retrieve relevant documentation including ATM fee schedule documentation. In this example, model 106 may output "There are no fees for in-network ATMs and a $5 fee per transaction for out-of-network ATMs." based on the ATM fee schedule documentation. In some examples, model 106 may access documentation related to a user associated with client device 104. For example, the user may be associated with an account with a service provider. In some cases, computing system 102 may provide or facilitate one or more services of the service provider. Computing system 102 may identify documentation related to the account based on determining that the prompt 108 is associated with the account. Computing system 102 may also identify the account based on client device 104, a mobile application associated with the service provider resident on client device 104, an IP address of client device 104, or other information. In some examples, the relevant documentation retrieved by model 106 may include documentation related to the account associated with the user. The model 106 may incorporate the documentation related to provide more relevant information to the user. As an example, in response to a prompt, such as "How can I add an authorized user to my account?", model 106 may retrieve documentation related to the account stating current authorized users (e.g., names of current authorized users on the account). In this example, model 106 may generate output data in response to the prompt, indicating: "Current authorized users on this account are John Smith and Jane Doe. This account allows up to three authorized users, so one more can be added," in addition to instructions on how to add an additional authorized user. In another example, model 106 may answer a direct question about the account based on relevant documentation related to the account. For example, in response to the query "Who are the authorized users on this account?", model 106 may generate an output response: "John Smith and Jane Doe are authorized users on this account."

In some embodiments, model 106 may be a RAG model trained via an SFT process to respond to prompts related to a specific task. For example, model 106 may be fine-tuned to respond to prompts related to a specific account (e.g., savings account, credit card account, and/or the like) of a service provider. Conventionally, training model 106 to respond to prompts related to the specific task via an SFT process may include utilizing a training data set to fine-tune the model and subsequently evaluating the trained model against a test data set using evaluation metrics (e.g., one or more). During both the training and evaluation phases, outputs may be generated by inputting information into a prompt template. However, conventional systems lack standardization in parts of the process, such as generating prompts from prompt templates, evaluation, and model selections. Even more challenging is that the prompt templates used during SFT processes and evaluation can differ. One reason for this is the lack of existing software tools that are capable of performing both SFT and evaluation of the performed SFT - existing software tools for SFT process are not created to cohere with existing software tools for evaluation of LLMs.

Models, such as a RAG model or a general LLM, are extremely sensitive to minor changes in phrasing, context, and the structure of input. Variations, even ones as minor as with respect to punctuation, in these elements can lead to variations in the responses generated by the model, affecting the ability of developers to replicate a model's performance and collaborate on fine-tuning the model. This limits the ability of LLMs to efficiently and effective be trained, evaluated, and subsequently deployed. This further limits the LLMs ability to scale to the ever-increasing demands of users. Described herein are systems, methods, and programming that overcome these technical problems by creating a platform where users can select from standardized options when executing SFT and evaluation thereof. As such, the system increases the efficiency of the SFT and evaluation processes by minimizing the need for re-training due to anomalous output and improving the reliability, accuracy, and capabilities of the results because the evaluation prompts align with the training prompts.

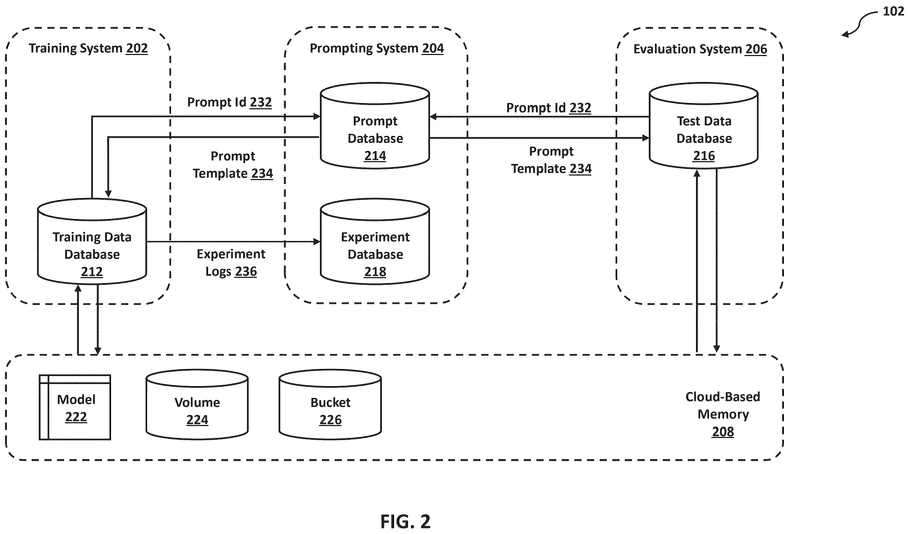

FIG. 2 shows an illustrative diagram of computing system 102 for facilitating supervised fine-tuning training and evaluation of large language models using a prompt library servicing the supervised fine-tuning training and the evaluation of the large language models, in accordance with one or more embodiments. For example, in response to receiving a request to execute a supervised fine-tuning process (e.g., an SFT process) to a model, computing system 102 may retrieve, train, and/or evaluate a model, such as model 222. In the illustrative example, model 222 may be stored in cloud-based memory 208, which may be hosted by a cloud-based computing system. Cloud-based memory 208 may also include volume 224, which includes storage devices that can be attached to model instances. This can enable the model instance to be used as a physical storage device. For example, volume 224 may include data associated with training a model, such as training data sets. Cloud-based memory 208 may also include bucket 226, which can represent containers for storing objects on cloud-based memory 208. For example, bucket 226 may store numerical data associated with model 222. In an example, these ranges may be hyperparameter ranges associated with the model. As an example, the model 222, volume 224, and/or bucket 226 may be accessed by some or all of the components of computing system 102.

In some examples, model 222 may include an LLM. In an example, model 222 may represent a RAG model that retrieves relevant documentation and enhances prompts based on the retrieved documentation. In this example, the LLM may generate an output based on the retrieved documentation. The SFT process may train (e.g., by fine-tuning one or more model parameters) model 222 for a specific task. For example, the SFT process may train model 222 to respond to prompts related to a specific topic (e.g., customer support, product recommendation, internal knowledge management, and/or the like). In some embodiments, computing system 102 may train model 222 for a specific task and may also evaluate a performance of model 222 to perform the task by evaluating model 222 using the evaluation metrics.

Computing system 102, in some embodiments, may include a training system 202. Training system 202 may include a training data database 212. As an example, training data database 212 may be accessed by some or all of the components of computing system 102. In some examples, training data database 212 may store a plurality of training data sets. The training data sets can be used by training system 202 to execute the SFT process. In this example, each training data set may be used to train a model (e.g., model 222) for a specific task or tasks. In some examples, each training data set may include a set of training sample queries, a set of training sample contexts, and a set of training reference results. As an example, a training sample query may include a question that a user could ask via a prompt (e.g., prompt 108 of FIG. 1). Training sample context can include relevant documentation, such as documents, pointers or resource identifiers directed to documents, or other data sources, that can be pulled to generate context for prompt 108. The training reference result can include an example of a response to the prompt.

In some embodiments, computing system 102 may also include an experimenting system 204. Experimenting system 204 may include a prompt database 214. As an example, prompt database 214 may be accessed by some or all of the components of computing system 102. Prompt database 214 may store a plurality of prompt templates. A prompt template may include instructions (e.g., task description, tone instructions, and/or the like) and have fields for the query and/or context to be inserted. Each prompt can be stored in prompt database 214 with a prompt identifier (e.g., prompt ID 232). In some examples, the prompt templates may be generated from past requests to execute the SFT process.

Experimenting system 204 may include an experiment database 218. As an example, experiment database 218 may be accessed by some or all of the components of computing system 102. Experiment database 218 may store selections associated with a request to execute an SFT process (e.g., prompt ID 232), selections associated with a request to evaluate a model trained via an SFT process (e.g., prompt ID 232), or other information. In some examples, experiment database 218 may store hyperparameters selections (e.g., batch size, learning rate, optimizer algorithm, and/or the like), a training data set selection (e.g., an identifier of a training data set selected from training data database 212), and/or evaluation metric selections (e.g., identifiers of each evaluation metric selected from test data database 216) associated with the request. For example, training system 202 may store experiment logs 236 comprising selections associated with a request to execute the SFT process in the experiment database 218. In some embodiments, information within experiment database 218 may be accessed to make recommendations for subsequent requests to execute the SFT process. As an example, a prompt recommendation model may access experiment database 218 to determine a recommendation of one or more prompt templates. The recommendation may be based on matching one or more selections associated with the request (e.g., a current request) to one or more identifiers associated with a previous request stored in experiment database 218. Additionally, or alternatively, information within experiment database 218 may be accessed and displayed by a client device (e.g., client device 104 of FIG. 1). For example, the information may be displayed by a GUI provided on the client device. In this example, the information within experiment database 218 may be used (e.g., by the user) to inform one or more future selections associated with a future request.

As part of the training process, training system 202 may retrieve a prompt template 234 from prompt database 214 of experimenting system 204 of computing system 102 based on a prompt ID 232. In some examples, the prompt identifier may be included as part of the request to execute the SFT process. For example, within a request to execute an SFT process to train a model (e.g., model 222), training system 202 may extract a prompt identifier (e.g., prompt ID 232) indicated by the request to be used to perform the SFT process. In other examples, the prompt identifier may be determined based on a previous request to execute the SFT process. For example, the prompt may be identified by determining a match between the request and a previously received request. Based on the similarity between the request and the previously received request, training system 202 may determine the prompt identifier used with the previously received request and may select that same prompt identifier for use during the current SFT process to be performed. In another example, training system 202 provide recommendations for the prompt identifier. In some examples, training system 202 may provide recommendations for the prompt identifier based on previous requests and/or one or more selections associated with the request. As an example, the system may recommend an LLM prompt template (e.g., "LLM1") based on the model identifier indicating that the selected model is an LLM. In examples where training system 202 provides recommendations for prompt identifiers, training system 202 may receive a selection from the user of the prompt identifier chosen from the recommendations. In some examples, training system 202 may store and/or retrieve information from the cloud-based memory 208, such as data stored by volume 224 and/or bucket 226.

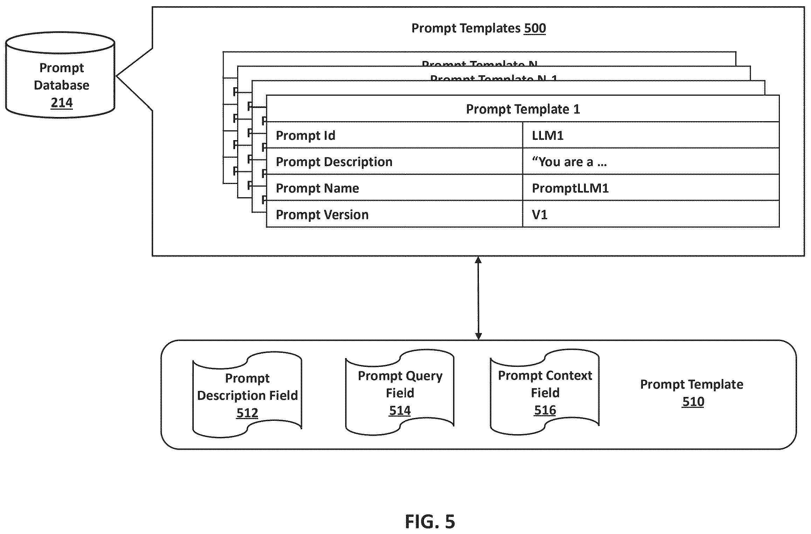

As an example, with reference to FIG. 5, prompt database 214 may include prompt templates 500. In some examples, each prompt template from prompt templates 500 may include data fields that are the same or similar to those of prompt template 510. For example, a prompt template, such as prompt template 510, may include a prompt description field 512, a prompt query field 514, a prompt context field 516, or other fields. Prompt description field 512 may give a description of a computing task to be performed by the model, tone instructions, and/or other instructions associated with the computing task. A query, such as a training sample query from a training data set, may be inserted into prompt template 510 at prompt query field 514. Context, such as training sample context from a training data set, may be inserted into prompt template 510 at prompt context field 516.

An example prompt template is shown below:

```
Prompt_LLM_1 = [INST] <<SYS>>
      You are a bot answering queries submitted by customers of Company X about
      their accounts. Give a response. Please ensure that your responses are positive.
      If you don't know what to say, say "I don't know."
      <</SYS>>
      Answer the following questions based on the context below
      {document_1}
      {query_1}
```

In the example, "You are a bot ..." represents example text used to populate prompt description field 512; "{query_1}" represents example text used to populate prompt query field 514; and "{document_1}" represents example text used to populate prompt context field 516. Likewise, an indication of a query may also be inserted at prompt query field 514 (e.g., "query_1"). In other examples, the text included in prompt query field 514 may include another query (e.g., Training_Query_1, Evaluation_Query_2, and/or the like). In some embodiments, an indication of a document (e.g., a link to the documents, a file path for a database, and/or the like), or the actual document, may be inserted at prompt context field 516 (e.g., "document_1").

In some embodiments, a prompt template (e.g., "Prompt Template 1") may be stored with associated metadata. For example, the metadata may include a prompt identifier (e.g., "LLM1" and prompt name (e.g., "PromptLLM1"). In some examples, a user may use the prompt name to identify a prompt template. In other examples, the system may use the prompt identifier to identify a prompt template from prompt templates 500. For example, as shown in FIG. 2, training system 202 and/or evaluation system 206 may use the prompt identifier from prompt database 214. It should be understood that in described examples, the prompt name may be used on the place of the prompt identifier to call the prompt template, and vice versa. Associated metadata may also include an indication of what version the prompt template is (e.g., "V1") and/or a model identifier.

Returning to FIG. 2, in some embodiments computing system 102 may include an evaluation system 206. Evaluation system 206 may include a test data database 216. As an example, test data database 216 may be accessed by some or all components of computing system 102. In some examples, test data database 216 may store a plurality of evaluation samples. In this example, each evaluation sample may include an evaluation sample query, evaluation sample metadata, and an evaluation reference result. In some examples, evaluation system 206 may retrieve a prompt template 234. Prompt template 234 may be used to generate prompts for input to the trained first large language model (e.g., model 222). Evaluation system 206 may determine prompt ID 232 associated with prompt template 234. Prompt template 234 may be selected from the prompt templates stored by prompt database 214 based on prompt ID 232. For example, evaluation system 206 may retrieve prompt template 234 based on transmitting prompt ID 232 to prompt database 214. In some examples, the test data database 216 may store a plurality of evaluation metrics that can be used to evaluate a performance of a model after an SFT process has been executed to the model. In some examples, the cloud-based memory 208 may store evaluation results, including rankings and historical results of models, such as the model 222, that have been evaluated. The evaluation system 206 may store and/or retrieve information from the cloud-based memory 208. For example, evaluation system 206 may retrieve model 222 after it has been trained by the training system 202 from cloud-based memory 208. In this example, training system 202 may store model 222 in cloud-based memory 208 after training, and evaluation system 206 may then retrieve model 222 from cloud-based memory 208.

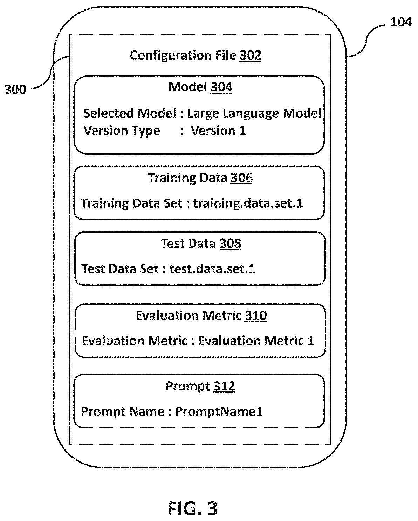

In some embodiments, cloud-based memory 208 may be configured to store a plurality of large language models, including, for example, model 222. A request to execute an SFT process may identify a particular model (e.g., model 222) from the models stored in cloud-based memory 208. The models stored in cloud-based memory 208 may include a variety of different types of models, such as various large language models, recurrent neural networks, and the like. In some embodiments, each of the models may be stored with a model identifier. When a request to execute an SFT process on a model (e.g., model 222), or to evaluate the performance of a model subsequent to the SFT process being executed, is received, training system 202 and/or evaluation system 206 may retrieve a corresponding model based on the model identifier. In some examples, the model identifier can be determined based on a prompt identified by the received request. For example, a model identifier corresponding to an LLM integrated with a RAG model may be determined based on a prompt description associated with the prompt. The prompt described can indicate that the model will be answering questions about a specific product or service (e.g., "about their accounts" with reference to the example prompt template described in FIG. 3).

In some embodiments, cloud-based memory 208 may be configured to store a plurality of prompt templates. For example, cloud-based memory 208 may store prompt templates in prompt database 214. Although illustrated as being a component of experimenting system 204, persons of ordinary skill in the art will recognize that a logical portion of cloud-based memory 208 may be used by experimenting system 204 (as well as, in some cases, training system 202 and/or evaluation system 206) to instantiate a corresponding database, such as prompt database 214, as well as, for example, experiment database 218. Similarly, training system 202 may use another logical portion of cloud-based memory 208 to instantiate a corresponding database, such as training data database 212, and evaluation system 206 may use yet another logical portion of cloud-based memory 208 to instantiate a corresponding database, such as test data database 216.

In some embodiments, computing system 102 may receive a request to execute an SFT process to train a large language model to perform a computing task when deployed. For example, the large language model may be a chatbot, and the computing task may be to respond to user questions related to a specific topic (e.g., a specific organization that is implementing the chatbot). In some examples, computing system 102 may receive the request to execute the SFT process from a client device. For example, computing system 102 may receive a set of text strings indicating selections associated with the request to execute the SFT process. In an example, the request may further comprise a request to evaluate a performance of the large language model after execution of the SFT process.

The request can include a training data set, or an indication (e.g., URL, pointer, etc.) of the training data set, to be used for the SFT process including a set of training samples each comprising a training sample query, training sample context, and training reference result. For example, the training sample queries may be user questions (e.g., "How do I check an account balance?"). In this example, there may be training sample context associated with each training sample queries that gives information related to the context, such as relevant chunks of documentation. In an example, training sample context may be identified and extracted from a user instructions manual. In some examples, training sample queries may also be associated with a training reference results. In an example, the training reference result may give an example of an appropriate (e.g., ideal) reply.

Additionally, or alternatively, the request can include a test data set, or an indication (e.g., URL, pointer, etc.) of the test data set, to be used to evaluate the performance of the large language model including evaluation sample queries, evaluation metadata, and/or evaluation reference results. In an embodiment, the evaluation sample queries may include examples of questions that a user could ask. The evaluation metadata may include documentation related to the evaluation sample queries. For example, the evaluation metadata may include a link from which relevant documentation can be pulled to generate context. Additionally, or alternatively, the evaluation metadata may include relevant chunks of documentation. In some embodiments, the evaluation metadata and the training metadata may be pulled from a same or similar data source. For example, the prompt template used for both training and evaluation can access a same set of documents for contextual information. Within the test data set, each evaluation sample query may be associated with an evaluation reference result. In some embodiments, the evaluation reference result may be an ideal answer. For example, the evaluation reference result may include a reference text sequence representing an answer that has been determined to satisfy a standard of quality. Further still, the request can indicate one or more evaluation metrics to be used to evaluate the performance of the model subsequent to the SFT process being executed.

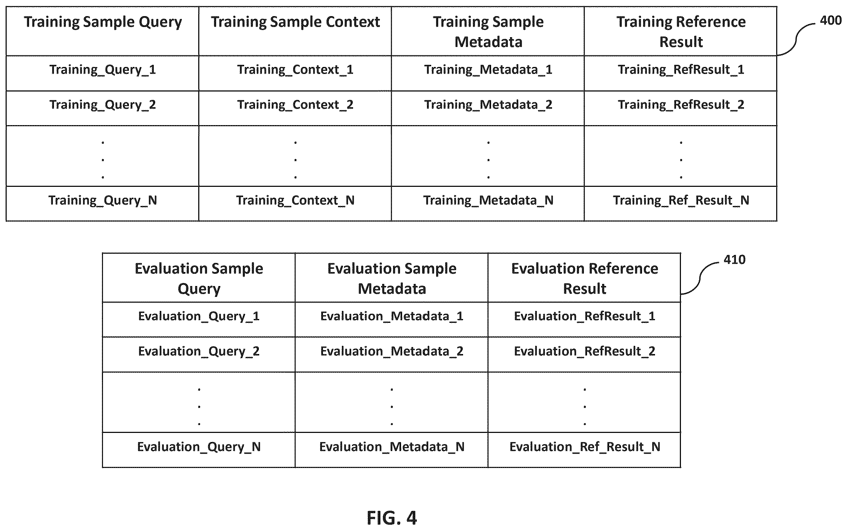

As an example, with reference to FIG. 4, training data set 400 can include training sample queries, training sample contexts, training sample metadata, training reference results, or other information. In some examples, training data set 400 may include N training samples (e.g., ten or more training samples, one hundred or more training samples, one thousand or more training samples, or more). For example, a first training sample may include a training sample query (e.g., Training_Query_1), a training sample context (e.g., Training_Context_1), training sample metadata (e.g., Training_Metadata_1), and a training reference result (e.g., Training_RefResult_1). In this example, the training sample query (e.g., Training_Query_1) may include a query that can be input into a model, such as a large language model. The training sample context (e.g., Training_Context_1) may include context associated with the query, such as relevant documentation related to the query. The training sample metadata (e.g., Training_Metadata_1) may include a set of documentation from which the training sample context (e.g., Training_Context_1) was determined, links to relevant documentation, indications of relevant domains from which documentation can be retrieved, and the like. The training reference result (e.g., Training_RefResult_1) may include an example of a desired result. In some embodiments, the example of the desired result may include a user-generated response. For example, an expert labeler may generate an ideal response, which may be used as the training reference result. Computing system 102 may, in some embodiments, be configured to generate a first training result based on the first training sample. In examples where training data set 400 contains N training samples, computing system 102 may generate N training sample results. Computing system 102 may train a model (e.g., model 222) based on a comparison of a training reference result to an associated training sample result.

In some embodiments, test data set 410 may include evaluation sample queries, evaluation sample metadata, evaluation reference results, or other information. In some examples, test data set 410 may include N evaluation samples. In an example, the N training samples may be the same or different quantity of samples as the N evaluation samples. In some embodiments, the N evaluation samples of test data set 410 may include a first evaluation sample comprising a first evaluation sample query (e.g., Evaluation_Query_1), a first evaluation sample metadata (e.g., Evaluation_Metadata_1), and a first evaluation reference result (e.g., Evaluation_RefResult_1). Computing system 102 may generate a first evaluation sample result based on a first set of test data. In examples where test data set 410 contains N evaluation samples, computing system 102 may generate N test sample results. Computing system 102 may evaluate a performance of the model using an evaluation metric indicated by the request. Evaluation of the evaluation metric by computing system 102 may include generating a score for the evaluation metric. For example, the score may be generated based on a comparison of a given evaluation sample result with a given evaluation reference results.

In some embodiments, a sample prompt may be generated for every sample in a training data set. For example, a sample training prompt may be generated for every training sample of training data set 400. Likewise, a sample evaluation prompt may be generated for every evaluation sample test data set 410. A sample prompt (e.g., training sample prompt or evaluation sample prompt) may be generated based on inserting a query (e.g., sample training query or sample evaluation query) and context (e.g., sample training context or sample evaluation context) into a selected prompt template. Results (e.g., sample training results or sample evaluation results) may be generated based on inputting the sample prompt (e.g., sample training prompt or sample evaluation prompt) into a (to-be-trained) model.

Returning to FIG. 2, as mentioned above, the request may include an indication of evaluation metrics (e.g., a set of one or more evaluation metrics) to use to evaluate the performance of a model after the SFT process has been executed. Each evaluation may evaluate a characteristic (e.g., coherence, accuracy, presence of hallucinations, and/or the like) of an output from the trained model representing a response to the evaluation sample query. In some examples, different types of tasks may be more accurately evaluated by different combinations of evaluation metrics. In these examples, the set of evaluation metrics may be selected based on the computing task that the large language model is to perform. For example, computing system 102 may determine which set of evaluation metrics will be used based on the computing task. As an example, accuracy may be selected as an evaluation metric in situations wherein factual accuracy is especially important, such as questions related to important financial planning decisions. In some examples, the user may identify the set of evaluation metrics. For example, the user may submit a selection of evaluation metrics as part of the request to execute the SFT process.

In some embodiments, a recommendation of the evaluation metrics may be generated by a recommendation model. Computing system 102 may implement the recommendation model, which may be stored in cloud-based memory 208. For example, a recommendation model may determine/generate a recommendation of one or more evaluation metrics based on the request. As an example, the recommendation may be generated based on a first selection associated with the request (to execute an SFT process on a model) matching a second selection associated with a previous request (to execute another SFT process on another model). In one example, the recommendation may be generated by the recommendation model based on a first model identifier associated with the request matching a second model identifier associated with the previous request. In another example, the recommendation may be generated based on one or more of the selections associated with the request. For example, the recommendation may be generated based on a model type associated with the request. In this example, the recommendation model may be programmed to generate one or more recommendations based on the model type. In some examples, a graphical user interface including the evaluation metrics may be generated via a client device. In some embodiments, the recommendation model may be a recommendation LLM. The recommendation LLM may take input sequences of requests to execute SFT processes and/or evaluate performances of models trained via the SFT processes into the recommendation LLM to obtain an output response of recommended evaluation metrics to use for the evaluation of the LLM.

In some embodiments, computing system 102 may receive user evaluation data related to a plurality of evaluation metrics. For example, the user evaluation data may indicate a performance of each of the evaluation metrics. In some embodiments, the user evaluation data may include user-provided evaluations. For example, users may provide numerical scores evaluating each performance metric. Additionally, or alternatively, users may provide text descriptions of the performance of the evaluation metric. In some embodiments, computing system 102 may select the evaluation metric based on the user-provided evaluations. Computing system 102 may select the evaluation metric based on user-provided evaluations associated with a similar computing task to the computing task associated with the user request. For example, computing system 102 may select evaluation metrics that produced the highest user-provided scores or convergence with user-provided scores. In another example, computing system 102 may select evaluation metrics based on analyzing text descriptions associated with the user evaluation data. For example, computing system 102 may provide the text descriptions to a large language model to cause the model to generate text including a recommendation for a set of evaluation metrics.

In some embodiments, computing system 102 may select evaluation metrics based on the model associated with the user request. For example, computing system 102 may determine, based on the request, a model type associated with the model. The model type may describe the architecture and/or functionality of the model. For example, a model type may be a RAG model, transformer model, recurrent neural network model, and/or the like. In some aspects, computing system 102 may select the evaluation metrics based on the model type.

In some embodiments, computing system 102 may generate, and cause to be displayed, a graphical user interface (GUI). In an example, computing system 102 may include on or more graphic processing units (GPUs) that may generate the GUI. The GUI may display one or more training data sets, one or more test data sets, and one or more evaluation metrics. For example, the GUI may display one or more options to the user. A user may indicate, via the GUI, which selection is being made (e.g., by selecting a checkbox, button, option from a dropdown menu, and/or the like). In some examples, the request may comprise a selection of the training data set, the test data set, and the set of evaluation metrics. For example, an input of the candidate prompt name, the training data set, the test data set, and the set of evaluation metrics may be displayed via the GUI. In another example where the input is a first input that comprises a candidate prompt name, computing system 102 may provide a recommendation for remaining categories of selections associated with the request to execute the SFT process that have not yet been chosen. For example, computing system 102 may provide a recommendation of the training data set, the test data set, and/or the set of evaluation metrics based on the first input. Computing system 102 may then receive a second input indicating the training data set, the test data set, and the set of evaluation metrics via the GUI based on the recommendation.

In some embodiments, computing system 102 may determine recommendations based on a previous request to perform SFT processes to various models. For example, computing system 102 may determine one or more previously used candidate prompt names. In some examples, the previously used candidate prompt names may each be associated with one or more training data sets, one or more test data sets, and one or more evaluation metrics associated with a previous request using those prompt names. In an example, computing system 102 may determine the recommendations based on the training data set, the test data set, and/or the set of evaluation metrics associated with matching previously used candidate prompt names.

As an example, with reference to FIG. 3, client device 104 may be configured to display a configuration file 302 showing selections associated with a user request. In an example, configuration file 302 may be displayed on client device 104 via a graphical user interface 300. In some embodiments, however, computing system 102 may be configured to cause graphical user interface 300 to be displayed on a display device, which may be the same or different from client device 104. For example, computing system 102 may use cloud-based I/O circuitry to display graphical user interface 300. Configuration file 302 may be displayed in response to receiving the request to execute the SFT process and/or evaluate the performance of a model subsequent to execution of the SFT process. In some examples, computing system 102 may receive the request from client device 104 based on client device 104 detecting, via graphical user interface 300, an input or selection to execute the SFT process to a model and/or evaluate a perform of the (trained) model. A user may submit model information 304 for configuration file 302. In some examples, graphical user interface 300 may display model information 304. For example, a user may input text of a selected model (e.g., "Large Language Model"), a model version type (e.g., "Version 1"), or other information about the model (e.g., hyperparameter quantity, result posting repository, etc.).

Graphical user interface 300 may display training data information 306. For example, training data information 306 may show an indication of a selected training data set (e.g., training.data.set.1). In some cases, training data information 306 may include the actual training data set, a pathname to a location whereby the training data set is stored (e.g., stored by training data database 212), a pointer to the training data set, or other information. Graphical user interface 300 may display test data information 308 (e.g., test data database 216). For example, test data information 308 may show an indication of a selected test data set (e.g., "test.data.set.1"). In some cases, test data information 308 may include the test data set, a pathname to a location (e.g., test data database 216) whereby the test data set is stored, a pointer to the training test set, or other information. Graphical user interface 300 may display evaluation metric information 310. For example, evaluation metric information 310 may display an indication of one or more evaluation metrics that will be used to evaluate the performance of a model after the SFT process has been executed (e.g., "Evaluation Metric 1"). In some cases, evaluation metric information 310 may include the evaluation metric, a pathname to a location whereby the evaluation metric is stored, a pointer to the evaluation metric, or other information. Graphical user interface 300 may display prompt information 312. For example, prompt information 312 may display an indication of a prompt that will be used to train and test the model (e.g., "PromptNamel"). In some cases, prompt information 312 may include the prompt template, a prompt identifier (indicating which prompt template stored by prompt database 214), a prompt description, a prompt name, etc., associated with the prompt template to be used for the SFT process and the evaluation.

A user can input model information 304, training data information 306, test data information 308, evaluation metric information 310, prompt information 312, or other information, or combinations thereof, using graphical user interface 300. For example, an input text box may be displayed via graphical user interface 300 (i.e., in response to a user touching a portion of graphical user interface 300 depicting model information 304, training data information 306, test data information 308, evaluation metric information 310, prompt information 312, etc.). The user can type text into the text box to provide some or all of training data information 306, test data information 308, evaluation metric information 310, prompt information 312.

Returning to FIG. 2, the request may include an indication of an initial set of parameters. For example, the initial set of parameters may include a set of hyperparameters (e.g., learning rate, batch size, number of epochs, and/or the like). Additionally or alternatively, the initial set of parameters may include internal model values learned from training data (e.g., weights, biases, and/or the like). The initial set of parameters may be adjusted based on training sample results and training reference results. For example, the system may adjust the parameters based on the training sample results and the training reference results. In some embodiments, training may begin with the initial set of parameters. In these embodiments, the initial set of parameters may be systematically adjusted throughout the process to arrive at a final set of parameters that optimizes the large language model's performance on the computing task. For example, one of the parameters in the set of parameters may represent a step size. In this example, the step size may indicate a change size for adjusting parameters to reduce discrepancies between the training reference result and the training sample results. For example, if a larger step size is given, larger changes will be made in the parameters between each iteration of training. Alternatively, if a smaller step size is given, smaller changes will be made in the parameters between each iteration of training. In an example, the set of parameters may include architecture selections (e.g., number of attention heads, number of layers, and/or the like). In this example, the model 222 may be initialized based on the set of parameters.

In some embodiments, the request may include an indication of a set of parameter ranges for a set of parameters of the trained large language model. In an example, computing system 102 may begin training model 222 using a first set of hyperparameters (i.e., a first set of values to initially set certain hyperparameters to) that fall within the set of parameter ranges (e.g., learning rate between LR1 and LR2). The trained model may be associated with a set of parameters that fall within the set of parameter ranges. For example, computing system 102 may use a grid search cross-validation method to evaluate all possible combinations of parameter values to determine the optimal combination of parameters within the set of parameter ranges.

In embodiments, computing system 102 may execute the SFT process to obtain a trained instance of model 222. For simplicity, model 222 can refer a model that has already had an SFT process executed thereon. In some cases, model 222 may include a pre-trained model that has subsequently had a fine-tuning process (e.g., SFT process) performed. Computing system 102 may select a prompt template from the prompt templates stored in prompt database 214. In some examples, the prompt template may be selected based on the model and the computing task. In other examples, computing system 102 may determine a prompt name based on the request. For example, the prompt name may be determined based on the computing task. In an example where the computing task is a text description of the task that the trained large language model is to perform, the prompt name may be chosen based on a similarity between the computing task and the prompt description. In this example, the similarity may be determined based on a match between one or more words in the computing task and the prompt description. In some examples, computing system 102 may select the prompt template based on the prompt name. For example, the computing system 102 may select the prompt template from a plurality of prompt templates in the prompt database 214 based on an identifier (e.g., text string name, file path and/or the like) comprising the prompt name. In some examples, computing system 102 may input training sample contexts and training sample queries into the prompt template to obtain training sample prompts, which can be input to the model (e.g., LLM) to obtain training sample results. In an example, the parameters of the large language model may be adjusted based on the training sample results and the training reference results. For example, computing system 102 may adjust the parameters of the large language model in response to comparing the training sample results and the training reference results.

In some embodiments, computing system 102 may generate, based on the user request a prompt template. For example, the system may generate prompt metadata associated with the prompt template including a candidate prompt name, a model identifier, model creation information, and/or a description of the computing task. In some examples, the candidate prompt template may be represented using a data structure including data fields. In these examples, generating the candidate prompt template may include populating fields of the data structure with candidate prompt metadata and/or values derived from the candidate prompt metadata.

In some embodiments, model creation information may be extracted from the request. For example, the model creation information may be biographical information about the model (e.g., creation data, developer, related models, creation goal, and/or the like). Additionally, or alternatively model creation information may include specifications about the model (e.g., training data, optimization method, parameters, and/or the like). In some examples, the model creation information may be stored in the prompt database as prompt metadata associated with the generated prompt template.

In some embodiments, the model identifier and the first description may be identified based on parsing the first request. For example, the first request may include natural language text. In this example, the natural language text may describe the first computing task. As an example "Use a large language model to generate responses to queries about network resources associated with a computing network" may be an example of the natural language text. In some examples, a parsing model may break the natural language text down to tokens comprising n-grams, words, and/or phrases. In these examples, the parsing model may identify relevant tokens. In some examples, one or more token fields may be inserted into the first description to populate the first description with at least one of a query or context relating to the query. As an example, with reference to the example described in the FIG. 5, "document_1" may be inserted into the context field, and "query_1" may be inserted into the query field. In the example "Use a large language model to generate responses to queries about network resources associated with a computing network," "large language model," "network resources," and "computing network" may be identified as relevant tokens. In an example, a first description (e.g., "Prompt Description" of FIG. 5) may be "You are a bot answering queries submitted by users of the computing network about their network resources. Give a response. If you don't know what to say, say 'I don't know.'" In this example, the tokens "computing network" and "network resources" have been inserted into the first description. In some embodiments, the first description may be populated with a query or context related to a query. In some embodiments, the natural language text may also identify the model identifier. As an example, the "Large Language Model" identifier of model information 304 in FIG. 5 may be chosen based on "large language model." In some examples, a token from the natural language text may not exactly the model identifier. For example, "Large Language Model" may be chosen based off of a token comprising "generative language model" being present in the natural language text describing the first computing task.

In some embodiments, the request may comprise a first request. In some examples, computing system 102 may extract the model identifier associated with model 222 and/or a first description of the first computing task associated with the first request. In examples, computing system 102 may generate a candidate prompt template and candidate prompt metadata in response to receiving the first request. In an example, the candidate prompt template and candidate prompt metadata may be generated based on the model identifier and/or first description. Computing system 102 may then update prompt database 214 to include the candidate prompt template and/or candidate prompt metadata. In some embodiments, the candidate prompt template and the candidate prompt metadata may be stored as flat text strings withing the prompt database.

In some embodiments, computing system 102 may select the prompt template from a plurality of prompt templates based on the request. In some examples, the prompt templates may be stored in a prompt database 214 with prompt metadata. Prompt metadata may comprise a candidate prompt name, the model identifier, model creation information, and/or the description of the computing task.

In some embodiments, the system may receive a second request to execute the SFT process. For example, the second request may be a request to train a second instance of model 222 that is received subsequent to updating the plurality of prompt templates stored by the prompt database to include the candidate prompt template and candidate prompt metadata associated with the first request. In some examples, the second request may be a request to train model 222 to perform a task that is different than the computing task associated with the first request. Alternatively, the second request may be a request to train model 222 to perform the same computing task associated with the first request. In this example, the second request may include (a) the candidate prompt name, (b) a training data set, (c) a test data set, and/or (d) a set of evaluation metrics. In an example where the second request is associated with the same computing task, the second request may differ in other selections such as the set of evaluation metrics or parameter selections.

In some embodiments, the second request may identify the training data set and/or test data set from a database via identifiers. The identifier may be a string of text indicating a path and/or name of a data set in a database. In some examples, computing system 102 determine a first resource identifier from the second request. In these examples, the first resource identifier may identify a training data set in a training data database 212. Additionally, or alternatively, computing system 102 may determine a second resource identifier of the test data set in the test data database 216. In some examples, computing system 102 may retrieve the training data set from a training data database 212 based on the first resource identifier and/or the test data set from a test data database 216 based on the second resource identifier.

In some embodiments, computing system 102 may evaluate, using the test data set, the set of evaluation metrics to obtain a set of evaluation metric scores. In an example, computing system 102 may generate context based on the evaluation metadata. For example, the system may pull relevant documentation based on the content of a sample evaluation query. The system may insert the context into the prompt template to create a prompt and obtain evaluation sample results based on the prompt. For example, the system may generate evaluation sample results based on providing the prompt to the trained model 222. In some examples, the system may generate the set of evaluation metric scores based on comparing the evaluation sample results to the evaluation reference results. The evaluation metric scores may indicate how well the large language model performed the computing task. For example, each evaluation metric score may analyze a different characteristic of the evaluation sample results.

In some embodiments, the evaluation reference results may be a pre-generated result associated with a human-generated ideal result. For example, the evaluation reference results may be an ideal result written by a human. In this example, the system may determine the evaluation metric score based on calculating a similarity of the human-generated ideal result to the sample evaluation result. In some examples the evaluation reference results may include machine-generated reference results. For example, the evaluation reference results may include results generated by a large language model. In this example, the evaluation reference results may be identified as ideal results based on review by humans.

In some embodiments, the system may evaluate an evaluation metric in the set of evaluation metrics based on embeddings. For example, computing system 102 may generate a first embedding representing a sample evaluation result in the set of evaluation sample results and a second embedding representing an associated reference evaluation result in the set of associated reference evaluation results. In this example, computing system 102 may use an embedding technique (e.g., Word2Vec, Global Vectors for Word Representation, sentence-BERT, and/or the like) to create a numerical representation of objects (e.g., words, sentences, and/or the like) in the sample evaluation result and reference evaluation result. In some examples, computing system 102 may generate a plurality of first embeddings corresponding to the set of evaluation sample results and a plurality of second embeddings corresponding to the set of reference evaluation results. In some examples, the system may compute a similarity score based on the first and second embeddings. In an aspect, the evaluation metric may include the similarity score.

In some embodiments, the system may compute the similarity score by calculating a distance metric using the first and second sample embeddings. For example, the distance metric may indicate how similar the sample evaluation result is to the reference evaluation result. The system may use a distance metric technique (e.g., cosine similarity, Euclidean distance, and/or the like) to quantify the similarity between vectors representing the first and second embeddings. In some examples, the system may compute a distance metric between each first embedding in the plurality of first embeddings and the associated second embedding in the plurality of second embeddings, thereby generating a plurality of distance metrics.

In some examples, the system may aggregate the plurality of distance metrics computed for each of the plurality of evaluation samples to obtain a large language model performance score. In some examples, the large language model performance score may indicate how well the trained large language model performed at the computing task for the prompt template. For example, the system may determine, based on the aggregation, that the evaluation sample results are similar to the evaluation reference results. In some examples, the aggregation may include a numerical score. The system may determine that the evaluation sample results are similar to the evaluation reference results based on the numerical score associated with aggregation being relatively low. Alternatively, the system may determine that the evaluation samples results are not similar to the evaluation reference results based on a relatively high numerical score associated with aggregation.

In some embodiments, an evaluation metric in the plurality of evaluation metrics may be associated with hallucination. Hallucination may indicate that a model is generating information that is not grounded in real-world facts. For example, model output containing hallucination may contain information that is false, misleading, and/or fabricated. In some examples, computing system 102 may compute a model hallucination score for the sample evaluation results. In an example, the system may use a hallucination model (e.g., Vectara, and/or the like) to compute the model hallucination score. In this example, the evaluation metric score may be determined based on the model hallucination score.

In some embodiments, the system may generate evaluation metric scores for each evaluation metric in the plurality of evaluation metrics. For example, the plurality of evaluation metrics may include a first evaluation metric and a second evaluation metric. In this example, the evaluation metrics may analyze different characteristics of the sample evaluation results. As an example, the first evaluation metric may analyze hallucination and the second evaluation metric may analyze similarity based on distance metrics. In some examples, computing system 102 may determine a first evaluation metric score based on the sample evaluation result and the reference evaluation result associated with the evaluation sample. The system may then generate a first model performance score based on the first evaluation metric score determined for each evaluation sample of the plurality of evaluation samples. Additionally, or alternatively, computing system 102 may determine a second evaluation metric score based on the sample evaluation result and the reference evaluation result associated with the evaluation sample. The system may then generate a second model performance score based on the second evaluation metric score determined for each evaluation sample of the plurality of evaluation samples.

In some embodiments, computing system 102 may compare the model performance score to a threshold. In these embodiments, the model performance score may include (e.g., be based on) a set of evaluation metric scores. In some examples, computing system 102 may determine that the model performance score satisfies a threshold model performance condition. In other examples, computing system 102 may determine that the model performance score fails to satisfy a threshold model performance condition. In examples where the model performance scores satisfy the threshold of model performance, generate an instruction to deploy the trained large language model and/or store the trained large language model for future deployment. In some examples where the model performance score does not satisfy the threshold of model performance, computing system 102 may generate an instruction to re-train the trained large language model. In this example, the instruction to re-train may select a different training data set. In some examples, re-training the trained large language model may include executing an additional SFT process.

In some embodiments, computing system 102 may display performance scores on a graphical user interface. For example, computing system 102 may generate a graphical user interface to display via a client device (e.g., computer, laptop, tablet, and/or the like). In an example, the graphical user interface may present the first model performance score associated with the first evaluation metric and/or the second model performance score associated with the second evaluation metric.

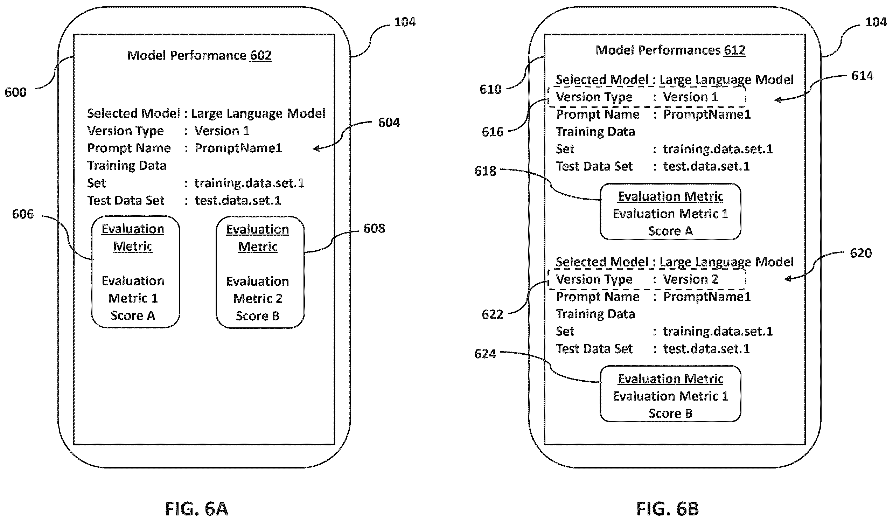

As an example, with reference to FIGS. 6A-6B, client device 104 may display a graphical user interface comprising one or more evaluation metric scores. As shown in FIG. 6A, client device 104 may display a graphical user interface 600 presenting model performance information 602. Model performance information 602 may include a first evaluation metric score and a second evaluation metric score associated with a previous request to execute an SFT process and evaluate the trained model. In some examples, first evaluation metric information 606 (e.g., associated with "Evaluation Metric 1") may analyze a different characteristic of the evaluation samples than second evaluation metric information 608 (e.g., associated with "Evaluation Metric 2"). Graphical user interface 600 may display model information 604, which may be associated with the previous request. In an example, model information may include a selected model (e.g., large language model), version type (e.g., version 1), prompt name (e.g., PromptName1), training data set identifier (e.g., training.data.set.1), and/or test data set (e.g., test.data.set.1), used for execution of an SFT process and evaluation thereof.

In some embodiments, graphical user interface 610 of FIG. 6B may display evaluation metric scores for different versions of a model. The first and second versions may be the same model upon which two different SFT processes have been executed. In some examples, graphical user interface 610 may display first information 614 associated with a first version of a model and second information 620 associated with a second version of a model. In some examples, first information 614 may include a version of the model (e.g., a first version indication 616) trained during the first SFT process. In some examples, second information 620 may include a version of the model (e.g., a second version indication 622) trained during the second SFT process. In some examples, graphical user interface 610 may display evaluation information associated with the versions of the model. For example, graphical user interface 610 may display first evaluation information 618 including an indication of an evaluation metric (e.g., Evaluation Metric 1) used to evaluate the first SFT process and a first score computed by the evaluation metric (e.g., Score A). Likewise, graphical user interface 610 may display second evaluation information 624 including an indication of an evaluation metric (e.g., Evaluation Metric 1) used to evaluate the second SFT process and a second score computed by the evaluation metric (e.g., Score B). As shown in FIG. 6B, graphical user interface 610 may display model performance information 612 indicating how a same model (e.g., Large Language Model) trained using two separate SFT processes (e.g., one using a first version of a model and the other using a second version of the model) produce two different scores (e.g., Score A and Score B) when evaluated using the same evaluation metric (e.g., Evaluation Metric 1).

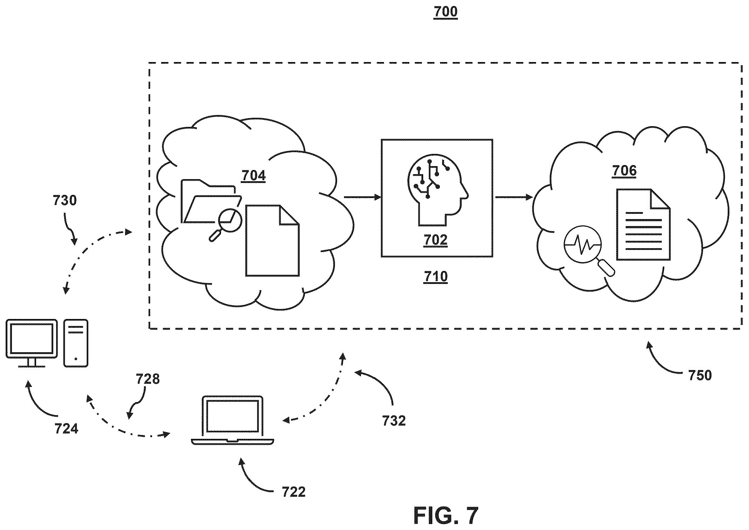

FIG. 7 shows illustrative components for a system used to facilitate supervised fine-tuning training and evaluation of large language models using a prompt library servicing the supervised fine-tuning training and the evaluation of the large language models, in accordance with one or more embodiments. For example, FIG. 7 may show illustrative components for standardizing options associated with a request to execute an SFT process and evaluate a performance of the executed SFT process. This standardization may increase repeatability of executing and evaluating an SFT process, thereby increasing efficiency. In some examples, less computer network resources may be used as reducing the need to re-train a model due to unexpected results. In addition, due to the extreme sensitivity that some machine learning models, such as LLMs, have to minor changes in their input, standardization of the training and evaluation improves the accuracy, performance, and efficiency of the subsequently trained (and evaluated) machine learning models. By improving the accuracy, performance, and efficiency of a machine learning model, fewer network resources are consumed by the client or the model's computing architecture. For example, because the described techniques improve model performance, fewer data packets may be transmitted across a computing network to the model to follow up on incomplete, inaccurate, or unhelpful responses to prior queries, thereby reducing data communicated across a network and reducing network resources that are consumed handling such data packets.

As shown in FIG. 7, system 700 may include mobile device 722 and user terminal 724. While shown as a smartphone and personal computer, respectively, in FIG. 7, it should be noted that mobile device 722 and user terminal 724 may be any computing device, including, but not limited to, a laptop computer, a tablet computer, a hand-held computer, and other computer equipment (e.g., a server), including "smart," wireless, wearable, and/or mobile devices. FIG. 7 also includes cloud components 710. Cloud components 710 may alternatively be any computing device as described above, and may include any type of mobile terminal, fixed terminal, or other device. For example, cloud components 710 may be implemented as a cloud computing system and may feature one or more component devices. It should also be noted that system 700 is not limited to three devices. Users may, for instance, utilize one or more devices to interact with one another, one or more servers, or other components of system 700. It should be noted, that, while one or more operations are described herein as being performed by particular components of system 700, these operations may, in some embodiments, be performed by other components of system 700. As an example, while one or more operations are described herein as being performed by components of mobile device 722, these operations may, in some embodiments, be performed by components of cloud components 710. In some embodiments, the various computers and systems described herein may include one or more computing devices that are programmed to perform the described functions. Additionally, or alternatively, multiple users may interact with system 700 and/or one or more components of system 700. For example, in one embodiment, a first user and a second user may interact with system 700 using two different components.

With respect to the components of mobile device 722, user terminal 724, and cloud components 710, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 7, both mobile device 722 and user terminal 724 include a display upon which to display data (e.g., conversational response, queries, and/or notifications).

Additionally, as mobile device 722 and user terminal 724 are shown as touchscreen smartphones, these displays also act as user input interfaces. It should be noted that in some embodiments, the devices may have neither user input interfaces nor displays and may instead receive and display content using another device (e.g., a dedicated display device such as a computer screen, and/or a dedicated input device such as a remote control, mouse, voice input, etc.). Additionally, the devices in system 700 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 7 also includes communication paths 728, 730, and 732. Communication paths 728, 730, and 732 may include the Internet, a mobile phone network, a mobile voice or data network (e.g., a 5G or LTE network), a cable network, a public switched telephone network, or other types of communications networks or combinations of communications networks. Communication paths 728, 730, and 732 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 710 may include one or more components of computing system 102, as mentioned above, such as a training system, prompting system, evaluation system, or other components. For example, one or more of cloud components 710 (and/or one or more instances of one or more of cloud components 710) may be used to implement training system 202, experimenting system 204, and evaluation system 206 of FIG. 2). In some examples, the training system and/or evaluation system may retrieve prompt templates based on transmitting prompt IDs. In an example, the training system may also store experiment logs. In some examples, the experimenting system may transmit prompt templates in response to receiving prompt IDs. In some embodiments, one or more of cloud components 710 may be used to define and manage cloud-based memory. For example, training system 202, experimenting system 204, and/or evaluation system may store and receive data from cloud-based memory 208.

Cloud components 710 may access one or more databases (e.g., prompt database 214, test data database 216, training data database 212, and experiment database 218 of FIG. 2) In some examples, cloud components 710 may access a cloud-based memory (e.g., cloud-based memory 208). The cloud-based memory may store a model (e.g., model 222 of FIG. 2), associated volume(s) (e.g., volume 224), and/or bucket(s) (e.g., bucket 226).

Cloud components 710 may include model 702, which may be a machine learning model, artificial intelligence model, etc. (which may be referred collectively as "models" herein). Model 702 may take inputs 704 and provide outputs 706. The inputs may include multiple data sets, such as a training data set and a test data set. Each of the plurality of data sets (e.g., inputs 704) may include data subsets related to user data, predicted forecasts and/or errors, and/or actual forecasts and/or errors. In some embodiments, outputs 706 may be fed back to model 702 as input to train model 702 (e.g., alone or in conjunction with user indications of the accuracy of outputs 706, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., training sample results and/or evaluation sample results).

In a variety of embodiments, model 702 may update its configurations (e.g., weights, biases, or other parameters) based on the assessment of its prediction (e.g., outputs 706) and reference feedback information (e.g., user indication of accuracy, reference labels, or other information). In a variety of embodiments, where model 702 is a neural network, connection weights may be adjusted to reconcile differences between the neural network's prediction and reference feedback. In a further use case, one or more neurons (or nodes) of the neural network may require that their respective errors be sent backward through the neural network to facilitate the update process (e.g., backpropagation of error). Updates to the connection weights may, for example, be reflective of the magnitude of error propagated backward after a forward pass has been completed. In this way, for example, the model 702 may be trained to generate better predictions.

In some embodiments, model 702 may include an artificial neural network. In such embodiments, model 702 may include an input layer and one or more hidden layers. Each neural unit of model 702 may be connected with many other neural units of model 702. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 702 may be self-learning and trained, rather than explicitly programmed, and can perform significantly better in certain areas of problem solving, as compared to traditional computer programs. During training, an output layer of model 702 may correspond to a classification of model 702, and an input known to correspond to that classification may be input into an input layer of model 702 during training. During testing, an input without a known classification may be input into the input layer, and a determined classification may be output.

In some embodiments, model 702 may include multiple layers (e.g., where a signal path traverses from front layers to back layers). In some embodiments, back propagation techniques may be utilized by model 702 where forward stimulation is used to reset weights on the "front" neural units. In some embodiments, stimulation and inhibition for model 702 may be more free flowing, with connections interacting in a more chaotic and complex fashion. During testing, an output layer of model 702 may indicate whether or not a given input corresponds to a classification of model 702 (e.g., evaluation metric scores and/or model performance scores).

In some embodiments, the model (e.g., model 702) may automatically perform actions based on outputs 706. In some embodiments, the model (e.g., model 702) may not perform any actions. The output of the model (e.g., model 702) may be used to evaluate the trained large language model on the task it has been fined-tuned to perform).

System 700 also includes API layer 750. API layer 750 may allow the system to generate summaries across different devices. In some embodiments, API layer 750 may be implemented on mobile device 722 or user terminal 724. Alternatively, or additionally, API layer 750 may reside on one or more of cloud components 710. API layer 750 (which may be A REST or Web services API layer) may provide a decoupled interface to data and/or functionality of one or more applications. API layer 750 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 750 may use various architectural arrangements. For example, system 700 may be partially based on API layer 750, such that there is strong adoption of SOAP and RESTful Web-services, using resources like Service Repository and Developer Portal, but with low governance, standardization, and separation of concerns. Alternatively, system 700 may be fully based on API layer 750, such that separation of concerns between layers like API layer 750, services, and applications are in place.

In some embodiments, the system architecture may use a microservice approach. Such systems may use two types of layers: Front-End Layer and Back-End Layer where microservices reside. In this kind of architecture, the role of the API layer 750 may provide integration between Front-End and Back-End. In such cases, API layer 750 may use RESTful APIs (exposition to front-end or even communication between microservices). API layer 750 may use AMQP (e.g., Kafka, RabbitMQ, etc.). API layer 750 may use incipient usage of new communications protocols such as gRPC, Thrift, etc.

In some embodiments, the system architecture may use an open API approach. In such cases, API layer 750 may use commercial or open source API Platforms and their modules. API layer 750 may use a developer portal. API layer 750 may use strong security constraints applying WAF and DDoS protection, and API layer 750 may use RESTful APIs as standard for external integration.

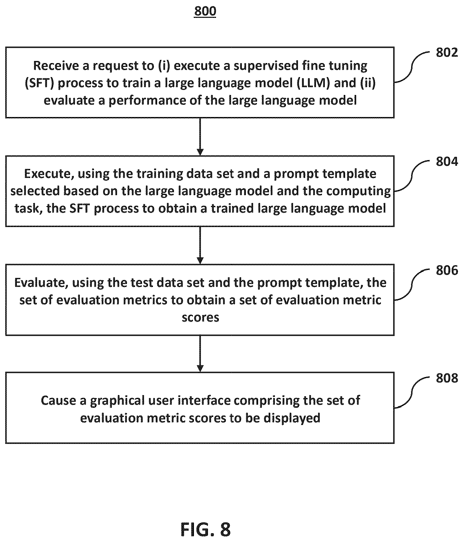

FIG. 8 shows a flowchart of the steps involved in optimizing the SFT process, in accordance with one or more embodiments. For example, process 800 may be implemented using one or more computing systems, such as computing system 102 of FIG. 2, or other components described herein. In some embodiments, one or more components of computing system 102 may execute certain aspects of process 800. For example, some steps of process 800 may be performed using training system 202, experimenting system 204, and/or evaluation system 206.

Described herein are techniques for fine tuning a large language model to respond to user questions related to a specific topic. Supervised fine-tuning (SFT) can be applied to an existing large language model to tailor it for particular tasks. The methods and systems described may provide improved techniques for standardizing input and evaluation of an SFT process. This creates practical technical advantages, for example, improving efficiency of SFT training processes.

SFT has emerged as a useful process for improving the task-specific performance of a pre-trained LLM. This process starts with a pre-trained model that has been trained on an extensive data set of generalized language in an unsupervised manner. SFT involves training the pre-trained model using a data set tailored to a specific task, which includes labeled examples to guide the learning process. During this training, the model's performance is continually evaluated against a validation set to ensure that it effectively adapts to the nuances of the task while avoiding overfitting.

However, SFT processes face a range of issues. For example, to effectively fine-tune the pre-trained model for a specific task, the tailored data set must consist of large quantities high-quality data. Using low quality and/or low quantities of data may result in overfitting the model to noisy data, introduction of biases, degraded model accuracy, and other suboptimal outcomes. As another example, the SFT process may face issues while training the model with the tailored data set such as catastrophic forgetting of knowledge acquired during pre-training, amplification of bias present in the tailored data set, or other issues. It may therefore be essential to evaluate the performance of fine-tuned models to ensure that the described issues are not emerging during training.

Accurately evaluating the performance of a fine-tuned model may also require large data resources including robust validation data sets and evaluation metrics. Furthermore, the SFT process may be sensitive to variations in resources used to fine-tune and evaluate the model. Small variations in resources such as the tailored data set an evaluation metrics may influence on the fine-tuned model and its evaluation. This may make it difficult to replicate previous results or collaborate on fine-tuning the model. Addressing these challenges may involve utilizing a system with the capacity to efficiently manage resources such as large data sets used during fine-tuning and evaluation to provide consistent access to high-quality training and evaluation resources.

Large language models are extremely sensitive to small variations in inputs. For example, small variations in a prompt, such as small variations in punctuation, word choice, etc., may have a strong impact on the LLM's output. It is therefore important that the same prompt is used during both training and evaluation, particularly when comparing the effect of variables (e.g., hyperparameter values, hyperparameter quantity, LLM type, etc.) on the LLM's performance. Using different prompts can lead to overuse of network resources training and evaluating the LLM, inconsistency in LLM performance results, downstream errors in LLM outputs due to improper training/evaluating, and other issues. The system described herein solves these and other technical problems by generating and using a universal prompt database, from which users may select prompt templates, for both SFT execution and post-SFT evaluation. By allowing users to select prompts from a universal database that will be used for both SFT and evaluation, more consistent output may be created from different executions and evaluations. Additionally, model updates including errors or problems can be more easily, accurately, and quickly identified.

After fine-tuning the model through the SFT process, the fine-tuned model can be evaluated by one or more evaluation metrics. The set of metrics may use a variety of methods to analyze output from a fine-tuned large language model, such as analyzing model output through another model. For evaluation metrics that utilize models, the version and hyperparameter selections of the evaluation model will have a strong impact on the evaluation score. Evaluations using different versions of evaluation models may lack comparability, and therefore lack utility. The system described herein provides a streamlined pipeline where users may make selections associated with the request for evaluation from standardized options, therefore improving the utility and repeatability of evaluation results. Additionally, the evaluation models may be directly imported into the system, resulting in faster load times. Furthermore, evaluation results and associated selections may be shared with all users of the system, thereby facilitating repeatability and collaboration.

While open-source repositories exist for at least some components of the SFT process, they lack the ability to consolidate the entire SFT pipeline and associated repositories into one system that allows users to execute SFT processes efficiently in a manner that is easily replicable. The system described herein integrates repositories with possible selections associated with the SFT process to a training and/or execution system, facilitating the users' ability to provide selections for an SFT process, record these selections, and generate results, including comparing the newly generated results to past results for previous requests to execute and/or evaluate an SFT process. In some embodiments, a single request may be submitted to initiate the SFT process to fine-tune an LLM and subsequently execute an evaluation of the fine-tuned LLM. For requests, selections can be pulled from a set of standardized repositories, minimizing unnecessary variation caused by inconsistent selection criteria. By virtue of integrating these standardized repositories into the system, the influence of unintended variable fluctuations (e.g., in prompt templates, evaluation metrics, and/or the like) may be reduced. Furthermore, the request and selections can be provided via a graphical user interface (GUI), therefore minimizing their need to interact with the underlying code. The described system creates a streamlined process for submitting the requests and facilitates a user's ability to submit and record new requests and view details associated with past request.

The system may increase the efficiency of executing and evaluating the SFT process by decreasing unintended variable fluctuations. Unexpected results caused by unintended variable fluctuations may require repeated execution of the SFT process, possibly multiple times, to replicate a previously obtained result. Each execution of the SFT process may take several hours and can be very computationally demanding. The technical solutions described herein can therefore improve the efficiency of executing and evaluating SFT process by increasing replicability. This may reduce the need to execute additional SFT processes, thereby saving time and computational resources. Furthermore, unintended variable fluctuations may result in decreased accuracy of the SFT process. For example, the unintended variable fluctuations may reinforce undesired patterns or incorrect predictions. Additionally, unexpected results may make it difficult to further refine (e.g., increase the accuracy of) previous executions of the SFT process. The system may therefore also improve the accuracy of executing and evaluating the SFT process by decreasing unintended variable fluctuations.

In some embodiments, unintended variable fluctuations may make it difficult for users to collaborate and further refine previous executions of the SFT process executed by their peers. In these embodiments, the lack of collaboration may further reduce the accuracy of the SFT process, since collaboration between at least two users typically yields better results than a single user would produce. For instance, two users may adopt different strategies for fine-tuning the model, potentially mitigating overfitting. Additionally, collaboration enables one user to identify errors or inconsistencies, such as mislabeled data or anomalous model behavior, that might be overlooked by another. Furthermore, collaboration facilitates the integration of diverse expertise, such as one user specializing in model training and another in model evaluation. Overall, this can enhance model accuracy by reducing overfitting, improving error detection, and leveraging the combined expertise of users. However, if executions of the SFT process have confusing results caused by unintended variable fluctuations (e.g., different versions of a prompt template, different training data sets, and/or the like) it may hinder effective collaboration between users to enhance the accuracy of the SFT process. The system may therefore also increase the accuracy and performance of the large language model by facilitating collaboration by allowing users to pull selections associated with the SFT process from the same standardized options and easily record and view selections associated with pasts requests of another user.

At step 802, a request may be received. The request may be to execute an SFT process to train a large language model and evaluate a performance of the trained large language model after the SFT process has been executed. For example, computing system 102 of FIG. 2 may receive a request to execute an SFT process to train a large language model to perform a computing task when deployed. In some examples, the computing task may include responding to questions related to a certain topic. The request may also include instructions to evaluate a performance of the large language model (i.e., how well the LLM responds to questions asked of it that relate to the specified topic) after execution of the SFT process. In an example, the request may be received from a user device (e.g., client device 104 of FIG. 1). In some examples, the request may be generated in response to detection of an input from a user received by client device 104. For example, computing system 102 may receive a notification that a request has been made to execute an SFT process to train a model to perform a computing task and evaluate the performance of the model based on a detected input to a graphical user interface displayed using client device 104.

In some embodiments, the request may include indications of selections associated with training and/or evaluating the model. For example, the request may indicate a training data set to be used for the SFT process (e.g., training data information 306 of FIG. 3). In some examples, the training data set may include training sample queries, training sample contexts, and training reference results. In an aspect, the training data set may additionally include training sample metadata. In some embodiments the request may indicate a test data set to be used to evaluate the performance of the large language model (e.g., test data information 308 of FIG. 3). In some examples, the test data set may include evaluation sample queries, evaluation metadata, and evaluation reference results. In some embodiments, a set of evaluation metrics may be chosen. For example, the request may indicate a set of evaluation metrics to evaluate the performance of the large language model after the SFT process has been executed (e.g., evaluation metric information 310 of FIG. 3). Alternatively, each evaluation metric of the set of evaluation metrics may be selected by the evaluation system (e.g., evaluation system 206 of FIG. 2) based on the computing task that the large language model is to perform.

In some embodiments, the graphical user interface may display options for selections that can be made with the request. For example, the graphical user interface my display one or more training data sets, one or more test data sets, and one or more evaluation metrics. In some examples, the request may comprise a selection of the training data, the test data set, and the set of evaluation metrics from the one or more training data sets, the one or more test data sets, and the one or more evaluation metrics, respectively. In an example wherein the graphical user interface displays options, the user may select the indications associated with the request from the options displayed on the user interface.

In some embodiments, the request may comprise an indication of an initial set of parameters. For example, the request may include indications of a starting value for parameters (e.g., hyperparameters such as batch size, learning rate, and/or the like). In this example, the initial set of parameters may be adjusted based on training sample results and training reference results. Similarly, the request may include an indication of a set of parameter ranges for a set of parameters of the trained large language model. The parameter ranges associated with the trained large language model may fall within the set of parameter ranges. For example, the large language model may start with an initial set of parameters. As an example, the set of initial parameters may fall within the parameter ranges. In some examples, the initial set of parameters may be incrementally changed throughout the training process. In these examples, the parameters may stay within the bounds of the set of parameter ranges throughout the training process, resulting in the parameters associated with the trained large language model staying within the set of parameter ranges.

At step 804, the SFT process may be executed to obtain a trained large language model. For example, a prompt template may be selected form the plurality of prompt templates. In some embodiments, the prompt template may be selected based on the large language model and the computing task. The SFT process may be executed using the training data set and the prompt template. For example, the training sample contexts and training sample queries may be inserted into the prompt template and then provided to the model to generate the training sample results. In some examples, parameters of the large language model may be adjusted based on the training sample results and the training reference results.

In some embodiments, the prompt template may be selected from a plurality of prompt templates (e.g., prompt templates 500 of FIG. 5). In some examples, the prompt template may be selected based on the request. For example, the prompt template may be selected based on one or more selections (e.g., the model, the training data set, and/or the like) associated with the request. In some examples, the prompt templates may be stored in a prompt database (e.g., prompt database 214 of FIG. 2). In this example, the prompt templates may be stored with prompt metadata. In an aspect, prompt metadata may include the candidate prompt name, the model identifier, and/or a description of the computing task. The prompt template may be selected based on the selections associated with the request and the prompt metadata. For example, the prompt template may be selected based on a match between the model identifier associated with the prompt metadata and the model associated with the request.

At step 806, the set of evaluation metrics may be evaluated. In some examples, a set of evaluation metric scores may be obtained based on evaluating the evaluation metrics. In these examples, evaluation context may be generated based on the evaluation metadata. For example, the evaluation context may include parts of the evaluation metadata that have been determined to be relevant to the evaluation sample queries. In some examples, evaluation context and evaluation queries may be inserted into the prompt template. The prompt template with the inserted evaluation context and evaluation queries may be provided to the model to cause the model to generate evaluation sample results. In some examples, each evaluation metric score of the set of evaluation metric scores may indicate how well the large language model performed the computing task based on the evaluation sample results and the evaluation reference results. In these examples, each evaluation metric score of the set of evaluation metric score may analyze a different metric of performing well (e.g., coherence, accuracy, relevance, and/or the like).

In some embodiments, an evaluation metric score for an evaluation metric in the set of evaluation metrics may be generated based on embeddings. For example, an embedding model may be used to generate sample embeddings representing evaluation sample results and reference embeddings representing evaluation reference results. The embeddings may be a vector representation of words and/or phrases. In some examples, distance metrics may be computed based on the sample embeddings and the reference embeddings. For example, the distance metrics may indicate how similar the evaluation sample results are to the evaluation reference results. In an example where the embeddings are represented by vectors, the distance metrics may represent similarity as a numerical distance between two embeddings. In some examples, the evaluation metric may be evaluated based on the numerical distance between the sample embeddings representing the evaluation sample results and the evaluation reference results.

In some embodiments, a prompt template may be generated and added to a prompt database (e.g., prompt database 214 of FIG. 2). In an example, the request may comprise a first request. In this example, a second request may be received prior to the first request. In some examples, a model identifier of the large language model and a description of a computing task to be performed by the large language model may be extracted from the second request. In these examples, the prompt template (e.g., prompt templates 510 of FIG. 5) and prompt metadata may be generated based on the model identifier and description. For example, prompt description field 512 may be generated based on the description of the computing task. In some embodiments, a plurality of prompt templates (e.g., prompt templates 500) may be updated by a prompt database (e.g., prompt database 214 of FIG. 2) to include the prompt template and the prompt metadata. In the described examples, the prompt template may be selected for the first request based on identifying a match between one or more selections associated with the first request and prompt metadata associated with the prompt template generated from the second request.

At step 808, the evaluation metrics may be displayed. For example, cloud-based I/O circuitry may display, or cause display of, a graphical user interface showing data associated with evaluation of the large language model (e.g., graphical user interface 600 and graphical user interface 610 of FIGS. 6A and 6B). In some embodiments, the graphical user interface may display the set of evaluation metric scores. Additionally, or alternatively, the graphical user interface may display one or more historical evaluation metric scores. For example, as shown in FIG. 6B, graphical user interface 610 may display the first evaluation information 618 associated with a first version of a model and the second evaluation information 624 associated with a second version of the model. In other examples, the historical evaluation metric scores may be associated with one or more other trained large language models of the plurality of large language models.

As an example of the described method, a user may submit a request to fine-tune a model to answer questions about a specific credit card account. In this example, the user may submit, via a client device (e.g., client device 104), the request and one or more selections associated with it. In some examples, the user may select a specific model to train. For instance, the user may submit a model identifier associated with a model in a model database (e.g., such as a database within cloud-based memory 208 of FIG. 2). In some embodiments, the model database may include one or more generative pre-trained transformer (GPT) models, Bidirectional Encoder Representations from Transformers (BERT) models, Language Model for Dialogue Applications (LaMDA) models, or other models, and the model identifier may identify one of these models. The models in the model database may have been trained on a general data set including a diverse collection of text. For example, a stored RAG model may be trained to pull documentation relevant to a query.

The request may also include identifiers of a training data set and a test data set (e.g., training data set 400 and test data set 410 of FIG. 4). As an example, the data sets may include training samples and evaluation samples related to authorized user accounts (e.g., a user's bank account, a user's medical records, a user's educational records, etc.). The queries included in the data sets be designed to ask questions that could be asked about a network resource (e.g., "What services are used by the network resource?", "How do I use the network resource?", and/or the like).

In some embodiments, the training system (e.g., training system 202) may execute the SFT process to fine-tune the selected model using the training data set. In this example, the training data set may include a plurality of training samples, each including a query (e.g., "What spending category earns most cash back?"), training sample metadata (e.g., documentation on all rewards associated with the credit card including: sign-up bonus documentation, documentation on spending category rewards, documentation on entertainment perks, and documentation on return protection), training sample context (e.g., documentation on spending category rewards describing that dining out earns 1% cash back, fuel purchases earn 2% cash back, and travel purchases earn 5% cash back), and a training reference result giving an ideal answer (e.g., "Travel purchases earn the most cash back. Travel purchases are eligible for 5% cash back. Let me know if you have any further questions about our cash back program!"). In these examples, the training system may insert a query and context into a prompt template (e.g., at prompt query field 514 and prompt context field 516 of FIG. 5) before providing it to the model. The prompt template may include instructions for the task. In this aspect, the prompt template may read: "You are a bot answering questions about credit card accounts. Give a response. Be friendly." The prompt template may be chosen (e.g., from prompt templates 500 in the prompt database 214 of FIG. 5) or generated based on information included with the request.

To execute the SFT process to fine-tune the model, the training system may insert the training sample context and the training sample queries into the prompt template to create a prompt. The prompt may be retrieved based on a name, such as "LLM_CREDIT". It will be understood that "Query:" and "Context:" may not be explicitly written and other formatting, such as that shown in the example prompt present in the description of FIG. 3, may be present. In this example, a prompt may read as follows:
You are a bot answering questions about credit card accounts. Give a response. Be friendly.
Query: What spending category earns the highest rewards?
Context: Dining out earns 1% cash back, fuel purchases earn 2% cash back, and travel purchases earn 5% cash back.
The model may generate an output based on the prompt. In this example, the model may generate a text string (e.g., "Travel earns 5% cash back") in response to the prompt. Based on a comparison of the text string (e.g., "Travel earns 5% cash back") with a text string representing the ideal answer (e.g., "Travel purchases earn the most cash back. Travel purchases are eligible for 5% cash back. Let me know if you have any further questions about our cash back program!"), the training system may adjust one or more parameters of the model. The training system may adjust weights of the model based on a difference between the model output and the ideal output. For example, the training system may generate, using an encoder (e.g., BERT model), a first embedding representing first text data comprising the text string (e.g., "Travel earns 5% cash back") and a second embedding representing second text data comprising the text string representing the ideal answer. The training system may determine a distance in the embedding space between the first embedding and the second embedding to determine how similar the generated text string is to the text string representing the ideal answer. Adjustments to parameters of the model (e.g., model 222 of FIG. 2) may be made based on the similarity between the generated text string and the text string representing the ideal answer.

In some embodiments, one or more steps of process 800 may be repeated with a new training sample (e.g., a training sample associated with the query "How do I report a lost or stolen card") after adjusting the weights of the model (e.g., model 222 of FIG. 2) based on comparing the model output and ideal output. This process may be repeated iteratively until a pre-determined number of trainings have been performed. In some examples, the training system may perform several full passes (e.g., epochs) over the training data set or break the training data set down into smaller batches. Once the model has been trained, the training system may store the fine-tuned version of the model. For example, the fine-tuned model may be stored in a memory (e.g., cloud-based memory 208 of FIG. 2) where it can be retrieved for evaluation (e.g., by the evaluation system 206 of FIG. 2).

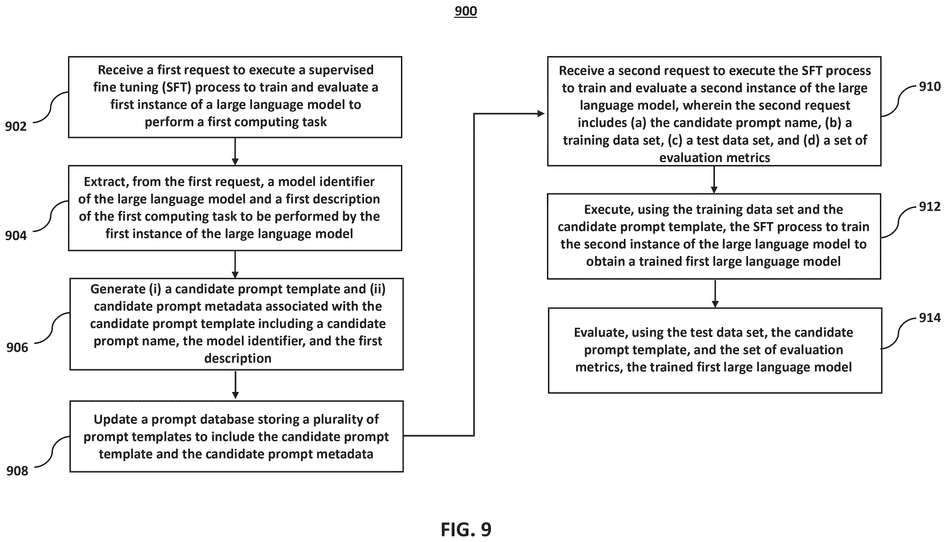

FIG. 9 shows a flowchart of the steps involved in generating prompt templates used to optimize the SFT process and evaluate of models trained using the SFT process, in accordance with one or more embodiments. For example, process 900 may be implemented using one or more computing systems, such as computing system 102 of FIG. 2, or other components described herein (e.g., training system 202, experimenting system 204, evaluation system 206, etc.).

At step 902, a first request to execute an SFT process may be received. For example, the first request may be a request to execute an SFT process to train and/or evaluate a first instance of a large language model to perform a first computing task. In some examples, the first computing task may be answering questions related to a specific topic. For example, the topic may be a type of account associated with a company (e.g., a credit card account associated with a bank). In some examples, the first request may be received from a client device (e.g., client device 104 of FIG. 1). In this example, a user may transmit the first request via the client device.

In some embodiments, a graphical user interface (e.g., graphical user interface 300 of FIG. 3) may be generated and provided to a client device (e.g., client device 104). In some examples, input may be detected via the graphical user interface. For example, the user may check a box, input a text string, and/or provide another input, via the graphical user interface. In some examples, the graphical user interface may receive an input of the candidate prompt name (e.g., prompt information 312), the training data set (e.g., training data information 306), the test data set (e.g., test data information 308), and the set of evaluation metrics (e.g., evaluation metric information 310) via the graphical user interface. The prompt candidate prompt name may be an identifier (e.g., prompt ID 232 of FIG. 2) that can be used to retrieve a prompt template from a database (e.g., prompt database 214). By receiving the indications via a GUI, the system may allow the users to submit the request without interacting with the underlying code. However, user can, in some embodiments, input source code to a configuration file or computing terminal to effectuate the request.

In some embodiments, previous prompt selections may be used to determine the input. For example, one or more previously used candidate prompt names, training data sets, test data sets, and evaluation metrics may be determined using a prompt recommendation model. In this example, the prompt recommendation model may retrieve training and evaluation resources associated with previous requests to execute the SFT process including candidate prompt names, training data sets, test data sets, and evaluation metrics from an experiments database (e.g., experiment database 218). The previously used training and evaluation resources may be stored in the experiments database in response to receiving a previous request to execute the SFT process and evaluate the trained large language model. In some examples, the input of the candidate prompt name, the training data set, the test data set, and the set of evaluation metrics may be based on the one or more previously selected candidate prompt names, training data sets, test data sets, and evaluation metrics. As an example, a user may submit a request including an indication of a candidate prompt name, training data set, test data set, evaluation metrics, or other data, to cause an SFT process - to fine-tune a (e.g., pre-trained) LLM - and evaluate the SFT process, to be automatically executed.

In some examples, the request may not be complete (e.g., the request may not include an indication of a prompt template to use, an evaluation metric, etc., or the request may include only a portion of the information needed or capable of being provided). In these examples, the system may determine the missing identifier(s) based on a previous request. The system may use keyword searching techniques to determine a match between the request and the previous request (e.g., a text-based comparison search). Based on the identifiers included in the previous (matching) request, the system may determine one or more identifiers missing from the incomplete request. In described embodiments the incomplete request may be represented by a flat string and the previous request may be stored (e.g., in the experiment database 218) as a flat string. As an example, the system may utilize infix matching to determine at least one matching previous request that contains a substring (e.g., a portion of a flat string representing the incomplete request) determined from the incomplete request. For example, the substring may be a single identifier (e.g., "prompt name" of FIG. 5). The system may determine the matching previous requests in response to determining a match between the substring and at least part of the previous request. In some examples, the system may not determine the previous requests based on an exact match. For example, the system may use fuzzy matching to determine previous requests that contain a string similar to the substring. In described examples, the system may use more complex searching methods such as wildcard searches, wherein "*" can represent any combination of characters and "?" can represent any singular character, or regular expression matching, wherein regex patterns can be used to determine more complex search criteria.

In some embodiments, recommendations for training and evaluation selections may be provided. As an example, the system may provide one or more recommendations to complete an incomplete request. The recommendations may be based on identifiers associated with previous requests, as described above. In an example, a first input comprising the candidate prompt name may be detected. In this example, the input may be detected via the graphical user interface. A recommendation for completing selections associated with the request may be provided based on the first input (e.g., candidate prompt name). The recommendation may be based on a previously used candidate prompt name. For example, the system may determine a partial match between a string representing a previous request and the first input. Based on the partial match, the system may recommend one or more other identifiers associated with the matching previous request as part of the request. In some examples, the recommendation may include at least one of the training data set, the test data set, or the evaluation metrics. In an example, the recommendation may be provided within a graphical user interface. For example, a graphical user interface may provide the recommendation to the user. In some embodiments, the user may select one or more of the recommendations as a second input. For example, the second input may indicate the training data set, the test data set, and the set of evaluation metrics selected from the recommendations. In an example, the second input may be detected via the graphical user interface.

At step 904, selections may be extracted from the first user request. In some examples, a model identifier may be extracted from the first user request. For example, a model identifier may identify the model upon which the SFT process will be executed (e.g., "Large Language Model" in model information 304 of FIG. 3). In an example, the model identifier may be extracted based on an identifier provided as part of the first request. For example, the first request may include a string of text representing the identifier, which may be extracted. Additionally, or alternatively, the first description (e.g., the description of the first computing task to be performed by the first instance of the first large language model after the SFT process has been executed) may be extracted from the first user request. In this example, the first description may be a description of a topic that the SFT process will fine-tune the model to respond to queries about. As an example, the first description may include instructions for the model on responding to queries about a service (e.g., network resource usage within a computing network).

In some embodiments, model creation information may be extracted from the first request. For example, the model creation information may include biographical information about the model (e.g., creation data, developer, related models, creation goal, and/or the like). Additionally, or alternatively model creation information may include configurations related to the model (e.g., training data, optimization method, parameters, version, and/or the like). In some examples, the model creation information may be stored in the prompt database (e.g., prompt database 214 of FIG. 5) as additional prompt metadata with the candidate prompt template.

In some embodiments, the model identifier and the first description may be identified based on parsing the first request. For example, the first request may include natural language text. In this example, the natural language text may describe the first computing task. In some examples, a parsing model may break the natural language text down to tokens comprising words and/or phrases. In this example, the parsing model may identify relevant tokens. In some examples, one or more token fields may be inserted into the first description to populate with at least one of a query or context relating to the query. In some embodiments, the natural language text may also identify the model identifier. In an example, the model identifier may be selected based on identifying a match between a token and a model identifier. In another example, a token from the natural language text may not exactly represent the model identifier. For example, the model name "Large Language Model" may be selected based on a token comprising "generative language model."

At step 906, a candidate prompt and associated candidate prompt metadata may be generated. In an example, the candidate prompt may comprise a candidate prompt template in which queries (e.g., such as "Training_Query_1" of FIG. 4) and/or context (e.g., such as "Training_Context_1" of FIG. 4) may be inserted. For example, a prompt description may be generated based on the first request. In an example, the prompt description may give background and/or instructions on the task the model will be performing. In the described embodiments, the candidate prompt metadata associated with the candidate prompt template may include a candidate prompt name (e.g., "PromptLLM1" of FIG. 5), the model identifier (e.g., "Large Language Model" of Fig. 3), and the first description (e.g., "Prompt Description" of FIG. 5).

In some embodiments, a candidate prompt template may be populated with metadata. For example, the candidate prompt template may be represented by a data structure. In this example, data fields of the data structure may be populated with the candidate prompt metadata. In some examples, each data field may correspond to a part of the candidate prompt metadata. In an example, the data structure may include a candidate prompt name data field, a model identifier data field, and a first description data field. In this example, the data fields may be populated based on the corresponding data type. As an example, with reference to FIG. 5, a data field, such as the "Prompt Name" data field shown in FIG. 5, may be populated with a text string including "PromptLLM1" based on candidate prompt metadata associated with "Prompt Template 1" and the data field being a candidate prompt name data field.

At step 908, a prompt database may be updated to include the candidate prompt template. For example, the prompt database (e.g., prompt database 214 of FIG. 5) may be updated to include the candidate prompt template (e.g., prompt template 510). In some examples, the prompt database may be updated to include the candidate prompt template in response to generation of the candidate prompt template. In an embodiment, the candidate prompt template and candidate prompt metadata may be stored as flat strings. For example, the prompt database may be updated to include a flat string representing the candidate prompt template and/or candidate prompt metadata. This may facilitate the system's ability to retrieve the prompt template based on the prompt name and/or a prompt identifier

At step 910, a second request to execute the SFT process may be received. For example, the second request may be a request to execute the SFT process to train and evaluate the first instance of the first large language model. As another example, the second request may be a request to execute the SFT process to train and evaluate a second instance (e.g., an instance of the first large language model associated with a different set of parameters and/or hyperparameters than the first instance) of the first large language model. In the described examples, the model (e.g., model 222) may be retrieved from a memory (e.g., cloud-based memory). In an aspect, the model may be the same model retrieved for the first request. In some examples, the second request may be received subsequent to the plurality of prompt templates stored by the prompt database (e.g., prompt database 214 of FIG. 2) being updated to include the candidate prompt template and the candidate prompt metadata. In an example, the second request may be a request to train the model for a second computing task. In some examples, the second request may include the candidate prompt. The candidate prompt may, for instance, be an indication of a candidate prompt template. For example, the second request may include a candidate prompt name corresponding to a prompt template of the plurality of prompt templates in the prompt database. In some examples, the second request may include a training data set comprising a plurality of training samples to be used with the candidate prompt template to execute the SFT process for the second instance of the first large language model. In an example, the training data set may identify a training data set that is particular to the second computing task. For example, the training data set may be related to the same topic as the second computing task. Additionally, or alternatively, the second request may include a test data set comprising a plurality of testing samples and a set of evaluation metrics to be used with the candidate prompt template to evaluate a performance of the second instance of the first large language model after execution of the SFT process. In an example, the test data set and/or evaluation metrics may be particular to the second computing task.

In some embodiments, data sets may be retrieved based on resource identifiers. For example, a first resource identifier of the training data set in the training data database (e.g., from, the training data database 212 of FIG. 2) may be identified based on the second request. Additionally, or alternatively, a second resource identifier of the test data set in the test data database (e.g., test data database 216 of FIG. 2) may be identified. Resource identifiers may be a string of text used to uniquely identify a data set (e.g., Uniform Resource Locator, file path, and/or the like). In some examples, the training data set from the training database may be retrieved based on the first resource identifier. Likewise, the test data set from the test data database may be retrieved based on the second resource identifier.

At step 912, the SFT process may be executed to train the first instance of the large language model. Alternatively, the SFT process may be executed to train the second instance of the large language model. In some examples, the SFT process to train the second instance of the large language model may be executed using the training data set and the candidate prompt template identified from the second request. In these examples, the SFT process to train the second instance of the large language model may be executed using the candidate prompt template generated in response to the first request. As an example, a training system (e.g., training system 202) may retrieve the prompt template generated in response to the first request (e.g., prompt template 234) based on transmitting an identifier (e.g., prompt ID 232) to a prompt database (e.g., prompt database.

In some embodiments, the SFT process may train the first and/or second instance of the large language model based on iteratively generating and evaluating sample training results. In an example, the training data set may include a plurality of training samples (e.g., training data set 400 of FIG. 4) to be used with the candidate prompt template to execute the SFT process for the first and/or second instance of the large language model. In some examples, each training sample may comprise a sample training query (e.g., "Training_Query_1" of FIG. 4), sample training context (e.g., "Training_Context_1" of FIG. 4), and reference training result (e.g., "Training Reference Result" of FIG. 4). For each training sample of the plurality (e.g., 1 through N as shown in FIG. 4) of training samples, a sample training result may be generated. In some examples, a sample training prompt may be generated by incorporating the sample training query and the sample training context into the candidate prompt template. In an aspect, the sample training prompt may be input into the first and/or second instance of the large language model to obtain the sample training result. In some examples, one or more parameters of the first and/or second instance of the large language model may be adjusted based on the sample training result. For example, the sample training result may be compared to the training reference result associated with the same training sample and the parameters may be adjusted based on the comparison.

In some embodiments, adjusting the parameters may include optimizing the first and/or second instance of the large language model to reduce discrepancies between the reference training result associated with the training sample and the sample training result. For example, an optimization technique (e.g., learning rate schedules, gradient descent, and/or the like) may be used to adjust the parameters. In this example, the parameters may be adjusted iteratively to produce a trained large language model that outputs a sample training result more similar to the training reference result at a subsequent iteration.

At step 914, the trained first large language model may be evaluated. For example, the first large language model may be evaluated using the test data set, the candidate prompt template, and the set of evaluation metrics. In some examples, the test data set may comprise a plurality of evaluation samples. In an aspect, the plurality of evaluation samples may be used to evaluate the SFT process executed for the first and/or second instance of the first large language model. In some examples, each of the plurality of evaluation samples may comprise a sample evaluation query (e.g., "Evaluation Sample Query" of FIG. 4), sample evaluation metadata (e.g., "Evaluation Sample Metadata" of FIG. 4) related to evaluation context associated with the sample evaluation query, and a reference evaluation result (e.g., "Evaluation Reference Result of FIG. 4) predetermined for the sample evaluation query. For each evaluation sample of the plurality of evaluation samples (e.g., 1 through N as shown in FIG. 4), a sample result may be generated. In some examples, a sample prompt may be used to generate the sample result. For example, a sample prompt may be generated incorporating sample evaluation query context into the candidate prompt template. In some examples, the sample evaluation query context may be generated based on the sample evaluation metadata. In an example, the sample evaluation result may be generated by inputting the sample prompt into the trained first large language model subsequent to execution of the SFT process.

In some embodiments, a performance of the trained first large language model may be obtained based on evaluating the set of evaluation metrics. In an example, the performance of the first and/or second instance of the trained first large language model may be evaluated based on the set of evaluation metrics. In some examples, a set of evaluation metric scores corresponding to the set of evaluation metrics may be determined based on the test data set and the candidate prompt template. In an example, the candidate prompt template may be input into the trained first large language model to generate a set of sample evaluation results. In this example, an evaluation metric score may be generated for each evaluation metric in the set of evaluation metrics for the trained first large language model based on the sample evaluation results. In some examples, each evaluation metric may analyze a different characteristic of the sample evaluation results. In an embodiment, the performance of the trained first large language model may be evaluated based on the set of evaluation metric scores. For example, the scores may be averaged (e.g., weighted or unweighted average) to produce a numerical score representing the performance.

In some embodiments, the trained first large language model may be stored for deployment based on the set of evaluation metric scores satisfying a threshold model performance condition. For example, a performance score may be generated based on the set of evaluation metrics. In this example, the performance score may be determined to be greater than or equal to a threshold value representing the threshold model performance condition. In an example, the trained first large language model may be stored for deployment based on this determination. Additionally, or alternatively, the threshold model performance condition may include a minimum score for an evaluation metric in the set of evaluation metrics. In this example, the trained first large language model may be stored for deployment based on determining that an evaluation metric in the set of evaluation metrics satisfies an associated minimum score representing at least part of the threshold model performance condition.

In some embodiments, the trained first large language model may be re-trained based on determining that the set of evaluation metric scores fail to satisfy the threshold model performance condition. In this example, the performance score may be determined to be less than the threshold value representing the threshold model performance condition. In an example wherein the threshold model performance condition includes a minimum score for an evaluation metric in the set of evaluation metrics, it may be determined that the trained first large language model does not satisfy the threshold model performance condition based on determining that an evaluation metric in the set of evaluation metrics does not satisfy an associated minimum score representing at least part of the threshold model performance condition. In some examples, additional training data sets used to execute an additional SFT process to the first and/or second instance of the large language model may be retrieved based on determining that the set of evaluation metric scores fail to satisfy the threshold model performance.

In some embodiments, a graphical user interface may be generated related to the set of evaluation metrics. In an example, the graphical user interface (e.g., graphical user interface 600 of FIG. 6A) may be generated in response to determining a set of evaluation metric scores. In this example, the graphical user interface may comprise a set of evaluation metric scores related to the set of evaluation metrics evaluated for the trained first large language model.

As a use case example, a request to execute the SFT process on a model may be received (e.g., via computing system 102). Based on the request, computing system 102 may generate a prompt template or select a prompt template from a prompt template database (e.g., prompt database 214 of FIG. 2). For example, a prompt template with a description of the computing task and fields for a query and context from a training and/or test data set to be inserted may be generated. In an example where the prompt template is generated; the description of the computing task may be included in the request. For example, the request may include the text shown below:
You are a bot answering questions from employees. Be accurate. If you don't know what to say, say "I don't know."

In this example, the request may be parsed to identify the string of text that corresponds to the computing task. Based on its identification, the text corresponding to description included with the request may be inserted as the prompt description in the prompt description field of the prompt template (e.g., prompt description field 512 of FIG. 5). Alternatively, the request may include a text explanation of a computing task that the model is to perform, and the description may be generated based on the explanation. For example, the following explanation may be received:
The model will be answering questions about network resources with which users can access via their authorized account.

In some embodiments, the model may generate tone instructions based on the explanation. For example, certain keywords, phrases, or other identifiers in the request may indicate specific tones to use, text to include in the prompt, or other information. As an example, based on identifying the words "compliance and regulations" in the request, a description - "Be accurate. If you don't know, say you don't know." - may be added to the prompt (prior to input to the model so that the model can use the description as context). As a result, the text shown above (i.e., "You are a bot ...") may be generated as the description based on the explanation. In some examples, data fields may also be added to the prompt template. For example, a field for queries (e.g., prompt query field 514 of FIG. 5) and/or a field for context (e.g., prompt context field 516 of FIG. 5). In some examples, the generated prompt template may be added to a plurality of prompt templates (e.g., prompt templates 500 of FIG. 5) in the database.

In the described embodiments, the prompt template may be stored with an associated model identifier. For example, the user request may indicate a model identifier for the model that the SFT process will be executed with. In these embodiments, the model identifier may be parsed from text submitted with the request, determined from a box checked by the user, and/or the like. Additionally, the prompt template may be stored with a prompt name. In an example, the prompt name may be generated based on the model identifier. In some examples, the prompt name may be generated based on at least part of the request. For example, an input a string of text may be used for the prompt name (e.g., "PromptName1" of FIG. 5). As an example, the user may input text (e.g., "LLM_PROMPT_NAME_1") to be used as the prompt name. Additional metadata may be stored with the prompt template. For example, a prompt identifier may be generated and stored with the prompt template. In some embodiments, the prompt identifier may include a set of distinct characters that uniquely identify the prompt template. For example, the string "6372" may be generated as the prompt identifier for the input prompt name (e.g., "LLM_PROMPT_NAME_1"). In this example, "6372" may be a randomly generated number that is uniquely identified within the prompt database. In some examples, the string may be a sequentially generated number (i.e., the 6372^{nd} prompt identifier added to the system).

In some examples, prompt templates may be stored in the database as a flat text string. In these examples, the above discussed information may be stored as a flat text string (e.g., without separate structures for metadata and content) to facilitate efficient storage and retrieval of the prompt templates. Flat strings may be retrieved based on searching for a text string. In the described example, searching for one or both of "LLM_PROMPT_NAME_1" and "6372" may retrieve the generated prompt template when it is stored in the prompt database as a flat string. Furthermore, this can reduce search times, thereby conserve network resource consumption needed for more robust searching techniques.

As an example, a later request to execute the SFT process on a model may retrieve the prompt template from the prompt database that was generated based on a previous request, such as the above-described example. For example, a similarity between the later received request and one or more previously received requests may be computed, and the previous request selected may have a greatest similarity when compared to the later received request. In the described example, a later received request may identify the generated prompt template based on indicating the prompt name (e.g., "LLM_PROMPT_NAME_1") and/or the prompt identifier (e.g., "6273"). In some examples, the request may include a request to both execute and evaluate the SFT process. In these examples, the prompt template may be retrieved from the prompt database during both training and evaluation (e.g., as seen in FIG. 2, where prompt ID 232 may be transmitted to both the training system 202 for training and the evaluation system 206 for evaluation). By virtue of retrieving the prompt template from the same database during training and evaluation, the system may prevent unintended fluctuations in the prompt language. For example, retrieving the prompt template from the same database ensures that the same (e.g., most recent) version of the template is used. This may prevent confusing results caused by unintended variations in prompt language, and more intuitive (e.g., less confusing) results may lead to fewer executions of the SFT process associated with analyzing unexpected results. Retrieving the prompt template from the same database during training and evaluation may therefore reduce the network resources consumed during execution of the SFT process.

As mentioned above, large language models, while extremely powerful, are also extremely sensitive to subtle changes to its input. To illustrate this, as an example, the following text may be an example of a prompt description that can be used:
You are a bot answering queries submitted by customers of Company X about their accounts. Give a response. Please ensure that your responses are positive. If you don't know what to say, say "I don't know."
Another prompt description, which is a slight modification to the previous description (i.e., to clarify tone and/or give more or less instructions), may be the following:
You are a bot answering queries submitted by customers of Company X about their accounts. Give a response. Please ensure that your responses are positive. If you don't know what to say, say *"I don't know the answer to that, however a customer service representative is available at (XXX) XXX-XXXX to help you. "*
These two prompt descriptions, while similar, may result in different answers when the model is unable to determine a response, and therefore is to output a response indicating the answer to a question was unable to be determined. In the first example, the model may respond with "I don't know" while the second example may cause the model to respond with "I don't know the answer to that, however a customer service representative is available at (XXX) XXX-XXXX to help you." The difference in these two responses may cause the different parameter adjustments during training and/or may result in different evaluation scores. For example, embeddings may determine a different distance between the ideal answer and "I don't know" than between the ideal answer and "I don't know the answer to that, however a customer service representative is available at (XXX) XXX-XXXX to help you." As a result, a different similarity score may be determined when using the original prompt description versus the updated prompt description. By virtue of having a standardized prompt database, the system may avoid different versions of a prompt template being used by accident. This may result in more consistent and replicable results between users. Furthermore, the system may ensure that the same prompt template is used during training and evaluation. Using different prompt versions during training and evaluation may result in inconsistent model behavior and/or inaccurate and/or irrelevant evaluation metrics. In the described system, both the training system (e.g., training system 202 of FIG. 2) and the evaluation system (e.g., evaluation system 206 of FIG. 2) may retrieve the same prompt template from the same database (e.g., prompt database 214 of FIG. 2), which may prevent inconsistencies between prompt templates used in training and evaluation. This is particularly beneficial at improving model accuracies because the same prompts will be used for both training and evaluation, which typically is not available when training programs and evaluation programs leverage different/separate prompt databases and/or are managed by different computing systems.

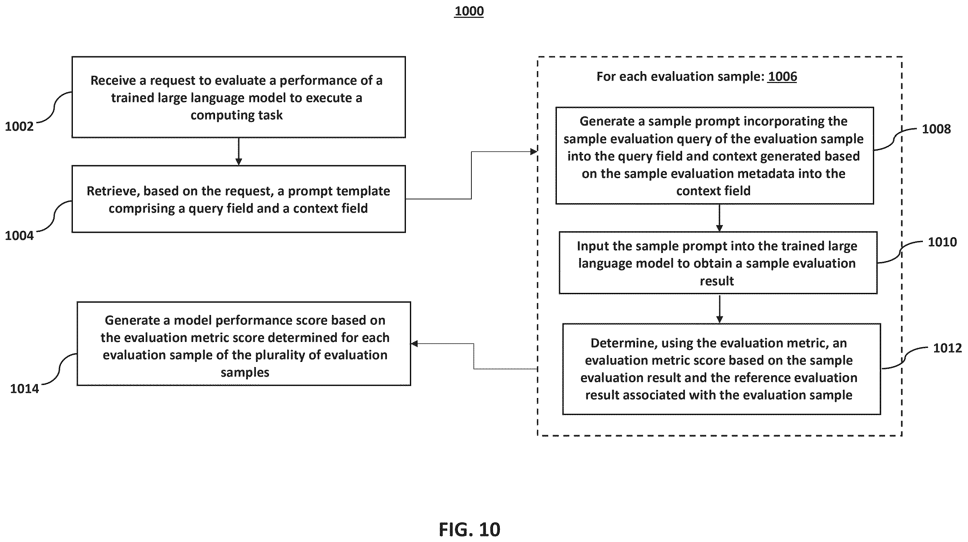

FIG. 10 shows a flowchart of an example process 1000 involved in evaluating the performance of a trained large language model, in accordance with one or more embodiments. For example, process 1000 may be implemented using one or more computing systems, such as computing system 102 of FIG. 2, or other components described herein.

Described herein are techniques for fine tuning a large language model to respond to user questions related to a specific topic. Supervised fine-tuning (SFT) can be applied to an existing large language model to tailor it for particular tasks. The methods and systems described may provide improved techniques for standardizing input and evaluation of an SFT process. This creates practical technical advantages, for example, improving efficiency of SFT training processes.

SFT has emerged as a useful process for improving the task-specific performance of a pre-trained LLM. This process starts with a pre-trained model that has been trained on an extensive data set of generalized language in an unsupervised manner. SFT involves training the pre-trained model using a data set tailored to a specific task, which includes labeled examples to guide the learning process. During this training, the model's performance is continually evaluated against a validation set to ensure that it effectively adapts to the nuances of the task while avoiding overfitting. After training, the model may be evaluated using one or more metrics to assess its performance on the specific task.

However, SFT processes face a range of issues. For example, to effectively fine-tune the pre-trained model for a specific task, the tailored data set must consist of large quantities high-quality data. Using low quality and/or low quantities of data may result in overfitting the model to noisy data, introduction of biases, degraded model accuracy, and other suboptimal outcomes. As another example, the SFT process may face issues while training the model with the tailored data set such as catastrophic forgetting of knowledge acquired during pre-training, amplification of bias present in the tailored data set, or other issues. It may therefore be essential to evaluate the performance of fine-tuned models to ensure that the described issues are not emerging during training.

Accurately evaluating the performance of a fine-tuned model may also require large data resources including robust validation data sets and evaluation metrics. Furthermore, the SFT process may be sensitive to variations in resources used to fine-tune and evaluate the model. Small variations in resources such as the tailored data set an evaluation metrics may influence on the fine-tuned model and its evaluation. This may make it difficult to replicate previous results or collaborate on fine-tuning the model. Addressing these challenges may involve utilizing a system with the capacity to efficiently manage resources such as large data sets used during fine-tuning and evaluation to provide consistent access to high-quality training and evaluation resources.

Large language models are extremely sensitive to small variations in inputs. For example, small variations in a prompt, such as small variations in punctuation, word choice, etc., may have a strong impact on the LLM's output. It is therefore important that the same prompt is used during both training and evaluation, particularly when comparing the effect of variables (e.g., hyperparameter values, hyperparameter quantity, LLM type, etc.) on the LLM's performance. Using different prompts can lead to overuse of network resources training and evaluating the LLM, inconsistency in LLM performance results, downstream errors in LLM outputs due to improper training/evaluating, and other issues. The system described herein solves these and other technical problems by generating and using a universal prompt database, from which users may select prompt templates, for both SFT execution and post-SFT evaluation. By allowing users to select prompts from a universal database that will be used for both SFT and evaluation, more consistent output may be created from different executions and evaluations. Additionally, model updates including errors or problems can be more easily, accurately, and quickly identified.

After fine-tuning the model through the SFT process, the fine-tuned model can be evaluated by one or more evaluation metrics. In an example, each metric may analyze different characteristics of text output from the fine-tuned model, and the user may select a set of metrics based on what is important for the computing task that the fine-tuned model will perform. The set of metrics may use a variety of methods to analyze output from a fine-tuned large language model, such as analyzing model output through another model. For evaluation metrics that utilize models, the version and hyperparameter selections of the evaluation model will have a strong impact on the evaluation score. Evaluations using different versions of evaluation models may lack comparability, and therefore lack utility. The system described herein provides a streamlined pipeline where users may make selections associated with the request for evaluation from standardized options, therefore improving the utility and repeatability of evaluation results. Additionally, evaluation results and associated selections may be shared with all users of the system, thereby facilitating repeatability and collaboration.

While open-source repositories exist for at least some components of the SFT process, they lack the ability to consolidate the entire SFT pipeline and associated repositories into one system that allows users to execute SFT processes efficiently in a manner that is easily replicable. The system described herein integrates repositories with possible selections associated with the SFT process to a training and/or execution system, facilitating the users' ability to provide selections for an SFT process, record these selections, and generate results, including comparing the newly generated results to past results for previous requests to execute and/or evaluate an SFT process. In some embodiments, a single request may be submitted to initiate the SFT process to fine-tune an LLM and subsequently execute an evaluation of the fine-tuned LLM. For requests, selections can be pulled from a set of standardized repositories, minimizing unnecessary variation caused by inconsistent selection criteria. By virtue of integrating these standardized repositories into the system, the influence of unintended variable fluctuations (e.g., in prompt templates, evaluation metrics, and/or the like) may be reduced. Furthermore, the request and selections can be provided via a graphical user interface (GUI), therefore minimizing their need to interact with the underlying code. The described system creates a streamlined process for submitting the requests and facilitates a user's ability to submit and record new requests and view details associated with past request.

In some embodiments of the described system, the user can submit a single request that initiates the complete process of evaluation and execution. For requests, the user can pull selections from a set of standardized repositories. The user may make these selections through a graphical user interface (GUI), minimizing the need to interact with underlying code. By virtue of integrating these standardized repositories into this user-friendly system, the influence of unintended variable fluctuations (e.g. in prompt templates, evaluation metrics, and/or the like) may be reduced. Furthermore, the described system creates a streamlined means for submitting the requests and facilitates a user's ability to record requests and view details associated with past requests. This user-friendly system allows users to quickly and seamlessly make requests to execute and evaluate the SFT process.

The system may increase the efficiency of executing and evaluating the SFT process by decreasing unintended variable fluctuations. Unexpected results caused by unintended variable fluctuations may require repeated execution of the SFT process, possibly multiple times, to replicate a previously obtained result. Each execution of the SFT process may take several hours and can be very computationally demanding. The technical solutions described herein can therefore improve the efficiency of executing and evaluating SFT process by increasing replicability. This may reduce the need to execute additional SFT processes, thereby saving time and computational resources. Furthermore, unintended variable fluctuations may result in decreased accuracy of the SFT process. For example, the unintended variable fluctuations may reinforce undesired patterns or incorrect predictions. Additionally, unexpected results may make it difficult to further refine (e.g., increase the accuracy of) previous executions of the SFT process. The system may therefore also improve the accuracy of executing and evaluating the SFT process by decreasing unintended variable fluctuations.

In some embodiments, unintended variable fluctuations may make it difficult for users to collaborate and further refine previous executions of the SFT process executed by their peers. In these embodiments, the lack of collaboration may further reduce the accuracy of the SFT process, since collaboration between at least two users typically yields better results than a single user would produce. For instance, two users may adopt different strategies for fine-tuning the model, potentially mitigating overfitting. Additionally, collaboration enables one user to identify errors or inconsistencies, such as mislabeled data or anomalous model behavior, that might be overlooked by another. Furthermore, collaboration facilitates the integration of diverse expertise, such as one user specializing in model training and another in model evaluation. Overall, this can enhance model accuracy by reducing overfitting, improving error detection, and leveraging the combined expertise of users. However, if executions of the SFT process have confusing results caused by unintended variable fluctuations (e.g., different versions of a prompt template, different training data sets, and/or the like) it may hinder effective collaboration between users to enhance the accuracy of the SFT process. The system may therefore also increase the accuracy and performance of the large language model by facilitating collaboration by allowing users to pull selections associated with the SFT process from the same standardized options and easily record and view selections associated with pasts requests of another user.

At step 1002, a request to evaluate the performance of a trained large language model may be received. For example, the request may be a request to evaluate the performance of the trained large language model to execute a computing task. In some embodiments, the request to evaluate the trained large language model may be received with the request to train the large language model. In some examples, the trained large language model may be a large language model that has been trained via an SFT process to generate response related to a specific topic. In an aspect, the request may be received via a user device. For example, the user may submit the request and associated selections via a GUI (e.g., graphical user interface 300 of FIG. 3).

In some embodiments, the evaluation metric may be determined based on the trained large language model. For example, the evaluation metric may be determined based on a type and/or feature of the large language model. In some examples, a model type of the trained large language model may be determined based on the request. In these examples, the evaluation metric may be selected based on the model type. For instance, an evaluation metric evaluating the presence of hallucination may be chosen based on a determination that the model associated with the request is particularly susceptible to generating hallucinations. As an example, pairing a RAG model with the LLM may reduce hallucination, since hallucinations may be the result of the model creating facts due to not having access to the information required to respond to a question. The hallucination model may therefore be selected in response to determining that the model does not include a RAG model.

As part of a hallucination, a model may generate a response to a query that is false, misleading, and/or does not answer the prompt. For example, in response to the prompt "Does this software work on operating system A?", the model may respond that it does, even if this software is not actually compatible with operating system A. In this example, the model may be responding based on a learned pattern (e.g., responding affirmatively when asked about compatibility) rather than checking compatibility of the specific example it has been asked about. This may be caused by lack of access to data (e.g., the model does not have access to data indicating what operating systems the software functions on), overconfidence (e.g., the prompt may not have provided instructions to say "I don't know" when the model does not have access to information that would determine the answer, so the model may generate a fabricated response to maintain conversation flow), training data bias (e.g., the training data did not include enough examples where there was not compatibility), and/or the like. As another example, in response to the prompt "Does this software run on operating system A?" the model may respond "This software is fully compatible with operating system B." In this example, the model has generated a response that is related to the prompt, but does not answer it. Similar to the previous example, this may be caused by training data bias, learned patterns, and/or lack of information.

In some embodiments, a recommendation of the evaluation metrics may be presented via a GUI. For example, a recommendation model may determine the recommendation of the evaluation metrics based on the request. As an example, the recommendation may be generated based on a first selection associated with the request matching a second selection associated with a previous request. In some examples, matching may be determined based on a match (e.g., full and/or partial) between a string associated with the request matching at least part of a flat string containing selections associated with the previous request. The recommendation may be generated based on a first model identifier associated with the request matching a second model identifier associated with the previous request. In this example, the recommendation model may be programmed to generate one or more recommendations based on a model type associated with the first model identifier. In some examples, a graphical user interface including the recommendation for the evaluation metrics may be generated via a client device (e.g., client device 104 of FIG. 1). In these examples the GUI may detect a selection from the user of evaluation metrics to be used in the evaluation process.

At step 1004, a prompt template associated with the request for evaluation may be retrieved. In some embodiments, the prompt template may be retrieved based on the prompt template used to fine-tune the model and/or an indication included with the request. In an example, the prompt template may comprise a query field and a context field. In some embodiments, the prompt template may be retrieved based on a prompt name associated with the request. For example, a prompt name (e.g., "PromptLLM1") of a first prompt template used to train the trained large language may be determined based on the request. In some examples, the prompt name may be determined from natural language text associated with the request. Alternatively, the prompt name may be determined based on an indication (e.g., checking a box) received as part of the request. In this example, the model may be a generally trained model that is not fine-tuned for a specific computing task (e.g., gross-tuned). A model that has not been fine-tuned may, for example, be evaluated to compare the gross-tuned model's performance to the performance of a fine-tuned model. In some examples, the prompt template may be selected from a plurality of prompt templates (e.g., prompt templates 500 of FIG. 5) stored in a prompt database (e.g., prompt database 214) based on the prompt name. In an example, the prompt template retrieved may comprise the first prompt template.

At step 1006, an evaluation sample result may be generated based on each evaluation sample in the test data set. For example, an evaluation sample result may be generated for each evaluation sample in the test data set based on the sample evaluation query and/or evaluation sample metadata. In some examples, the sample evaluation result may be a response to a question included as part of the sample evaluation query. In an aspect, the response may be based on at least part of the associated sample metadata.

In some embodiments, context may be generated to incorporate into the sample prompt. For example, context may be generated based on the sample evaluation metadata. In an example, the sample evaluation metadata may include documentation. Based on a query (e.g., "Evaluation_Query_1" of FIG. 4) context may be generated by selecting relevant parts of the documentation included as the evaluation sample metadata associated with the query (e.g., "Evaluation_Metadata_1"). In some examples, the context may be incorporated into the sample prompt. For example, the context may be inserted as a text string into the sample prompt.

At step 1008, a sample prompt for each evaluation sample in the set of evaluation samples may be generated. For example, the evaluation may be associated with a sample evaluation query (e.g., "Evaluation_Query_1"). In this example, the sample evaluation query may be input into the query field of the prompt template. In some examples, the context that has been generated based on the evaluation sample metadata and query may be inserted into the context field of the prompt template. In an embodiment, the sample prompt may include a prompt template in which the query field is populated with the sample evaluation query and the context field is populated with the context generated based on the sample evaluation metadata.

In some embodiments, the large language model may be trained prior to generating the sample prompt. For example, the request to evaluate the performance of a trained large language model may be associated with a request to train a large language model. As an example, a large language model may be trained via the method discussed on FIG. 8 to produce the trained large language model. In this example, the evaluation request may evaluate the performance of this trained large language model. In some embodiments, the request to train the large language model may further comprise a training data set (e.g., training data set 400 of FIG. 4) to be used to train the large language model. In an example, the large language model may be trained using the training data set and the prompt template associated with the training request. In this example, the large language model may be trained prior to generating the sample prompt used in evaluation.

At step 1010, a sample evaluation result may be obtained for each evaluation sample in the set of evaluation samples. For example, the sample prompt can be input into the trained large language model. In this example, a sample evaluation result may be obtained from the trained large language model in response. In some examples, the sample evaluation result may be a response to a query include in the sample prompt based on the description and/or context associated with the sample prompt. In an example, the sample evaluation result may be natural language text.

At step 1012, an evaluation metric score may be determined for each evaluation sample in the set of evaluation samples. For example, for each sample the sample evaluation result and the associated reference evaluation result (e.g., "Evaluation_RefResult_1) may be input into an evaluation model associated with the evaluation metric. In this example, the evaluation model can generate a score, using an evaluation metric score, based on the sample evaluation result and the associated reference evaluation result. For example, the evaluation model may compare the sample evaluation result and the associated reference evaluation result to generate the evaluation metric score.

In some embodiments, the evaluation metric score may be determined based on a model hallucination score. For example, a model hallucination score for the sample evaluation result may be computed using a hallucination model (e.g., Vectara and/or the like). In this example, the hallucination model may determine how factually incorrect, fabricated, or misleading the evaluation sample is. In an example, the hallucination model may determine a model hallucination score, wherein the model hallucination score is a numerical score assessing the presence of hallucinations. In some examples, the evaluation metric score may be determined based on the model hallucination score.

In some embodiments, the evaluation metric score may be determined based on sample embeddings. For example, a first embedding representing the sample evaluation result may be generated. In this example, a second embedding representing the reference evaluation result may also be generated. In an embodiment, embeddings may be numerical representations of words and/or phrases. For example, embeddings may map the words and phrases in the sample evaluation result and the reference evaluation result in a continuous vector space as vectors. These vectors may capture semantic meaning between words and/or phrases included in the sample evaluation result and the reference evaluation result. In some examples, a similarity score may be computed using the first embedding and the second embedding. The similarity score may represent the similarity between the reference evaluation result and the corresponding sample evaluation result. In an example wherein the embeddings are vectors, the similarity score may be a distance between the first and the second vector. In some examples, the evaluation metric score may comprise the similarity score.

In some embodiments, the reference evaluation result may be a pre-generated result. In some embodiments, the reference evaluation result may be an ideal result, as determined by one or more designated labelers. For example, a human-generated ideal result may be a response to the query (e.g., "Evaluation_Query_1" of FIG. 4) written by a query-domain specific expert. In an example, the pre-generated result may be the human-generated ideal result. In another example, the pre-generated result may be a transformed version of the human-generated ideal result. For example, the human-generated ideal result may be provided to a model to cause it to generate the pre-generated result. In this example, the pre-generated result may be a formatted version of the human-generated result. As an example, the human-generated ideal result may be "This software has been designed to work seamlessly with operating system B, ensuring full compatibility and a smooth user experience." In this example, a statement (e.g., "Thanks for your question! ") may be added to the human-generated ideal result generate the pre-generated ideal result (e.g., "Thanks for your question! This software has been designed to work seamlessly with operating system B, ensuring full compatibility and a smooth user experience.). In some examples, a similarity score may be calculated between the reference evaluation result comprising the pre-generated result associated with the human-generated ideal result and the sample evaluation result. In an example, the evaluation metric score may comprise this similarity score.

In some embodiments, the evaluation metric may be selected based on user-provided evaluations. For example, user evaluation data related to a plurality of evaluation metrics may be received. In an example, the user evaluation data may indicate a performance of each evaluation metric of the plurality of evaluation metrics. For example, the user-provided evaluations may be associated with numerical rankings. In this example, the evaluation metric may be chosen based on having the highest numerical ranking. In another example, the user-provided evaluations may be associated with text strings. In this example, the evaluation metric may be chosen based on the text strings associated with the user-provided evaluations. For example, an evaluation metric recommendation model may generate a recommendation for the evaluation metric based on the user-provided evaluations and/or information associated with the request.

At step 1014, a model performance score may be generated based on the evaluation metric score determined for each sample of the plurality of evaluation samples. For example, the model performance score may be generated based on combining (e.g., adding, weighted or unweighted averaging, and/or the like) each sample of the plurality of evaluation samples a number representing the model performance score.

In some embodiments, the trained large language model may be stored for deployment based on the set of evaluation metric scores satisfying a threshold model performance condition. For example, a performance score may be generated based on the set of evaluation metrics. In this example, the threshold model performance condition may be the performance score being greater than or equal to a threshold value. The threshold model performance condition may, in some examples, include additional or alternative conditions, such as an individual metric of the set of metrics being greater than or equal to a threshold value (e.g., a threshold value that may be different than the threshold value for the performance score). In an example, the trained large language model may be stored for deployment based on the determination that it satisfies the threshold model performance condition.

In some embodiments, the trained large language model may be re-trained based on determining that the set of evaluation metric scores fail to satisfy a threshold model performance condition. In this example, the threshold model performance condition may include a threshold value, and the performance score determined from the set of evaluation metric scores may be determined to be less than this threshold value. As a result, the set of evaluation metric scores may fail to satisfy the threshold model performance condition. In an example where the threshold model performance condition includes a minimum score for an evaluation metric in the set of evaluation metrics, it may be determined that the trained large language model does not satisfy the threshold model performance condition if the evaluation metric in the set of evaluation metrics does not satisfy an associated minimum score representing at least part of the threshold model performance condition. In some examples, additional training data sets to execute an additional SFT process to the second instance of the large language model may be retrieved based on determining that the set of evaluation metric scores fail to satisfy the threshold model performance.

In some embodiments, the evaluation metric may comprise multiple evaluation metric scores assessing different characters of the model performance. For example, the evaluation metric may comprise a first evaluation metric, the evaluation metric score may comprise a first evaluation metric score, and the model performance score may comprise a first model performance score. In an example, a second evaluation metric and a second evaluation metric score based on the sample evaluation result and the reference evaluation result associated with the evaluation sample may be determined. In this example, the second model performance score may be generated based on the second evaluation metric score determined for each evaluation sample of the plurality of evaluation samples. As an example, a first model performance score analyzing similarity (e.g., via embeddings) and a second model performance score analyzing hallucination may be generated for a set of evaluation samples.

In some embodiments, a second model performance score may be generated based on a second sample prompt. For example, the prompt template may comprise a first template and the model performance score may comprise a first model performance score. In some examples, a second prompt template may be selected. For example, the second prompt template may be selected to compare the difference in output based on the first prompt template and output based on the second prompt template. In this example, the first prompt template and the second prompt template may include different instructions (e.g. different descriptions in prompt description field 512 of FIG. 5). In some examples, the first prompt template and the second prompt template may be associated with the trained large language model. The trained large language model may generate different output based on the different instructions included in the first and second prompt templates. In an example, an evaluation sample may be generated for each evaluation query and/or metadata (e.g., evaluation sample queries 1-N, evaluation sample metadata 1-N of FIG. 4). In some examples, a second sample prompt may be generated based on the second prompt template and training data set. In these examples, the second sample prompt may incorporate the sample evaluation query and the context into the second prompt template. In some embodiments, the second sample prompt may be input into the trained large language model to obtain a second sample evaluation result. In these embodiments, a second evaluation metric score may be determined based on the second sample evaluation result and the reference evaluation result associated with the evaluation sample. In the described examples, a second model performance score may be generated based on the second evaluation metric score determined for each evaluation sample of the plurality of evaluation samples. This second model performance score may be compared to the first model performance score to determine the impact of the two different prompt templates.

In some embodiments, graphical user interfaces may be generated to display evaluation information. For example, the graphical user interface may display one or more model performance scores. In an aspect, the graphical user interface may be displayed via cloud-based I/O circuitry. In examples wherein a first and second model performance score have been generated, the user interface may present the first model performance score associated with the first evaluation metric and the second model performance score associated with the second evaluation metric. As an example, a first model performance score analyzing similarity (e.g., via embeddings) and a second model performance score analyzing hallucination may be displayed on the graphical user interface. In another example, a first model performance score associated with the first prompt template and a second model performance score associated with the second prompt template may be displayed on the graphical user interface.

As an example of the described method, a request to evaluate a model may be received. In some examples, the request to evaluate the model may be associated with a request to execute the SFT process. For example, the request to evaluate the model may be associated with the example of a request to execute the SFT process to fine-tune a model to answer questions about a specific credit card account described in FIG. 8. After the fine-tuning process described in FIG. 8 is executed, the fine-tuned model may be stored in a memory (e.g., cloud-based memory 208 of FIG. 2). The model may be retrieved from this memory for evaluation. As part of the request for evaluation, an indication of a test data set (e.g. "test.data.set.1" of FIG. 5) may be received. The test data set may include evaluation samples, wherein each sample has a query (e.g., "Evaluation_Query_1" of FIG. 4), metadata (e.g., "Evaluation_Metadata_1" of FIG. 4) and an ideal result (e.g., "Evaluation_RefResult_1" of FIG. 4). In the described example, the test data set may include about credit cards that a user could ask that are similar to those included in the training data set (e.g., "What is the charge for a foreign transaction", "How do I request a credit limit increase?" and/or the like). Each evaluation sample in the test data set may also include corresponding metadata (e.g., terms and conditions for the card, a user guide for the card, and/or the like) and an ideal answer (e.g., "Thank you for asking! For our credit cards, the foreign transaction fee is typically 1% of the transaction amount. This applies to purchases made in a foreign currency or transactions processed outside the U.S."). Based on the request, a prompt template may be retrieved. In some examples, the evaluation system (e.g., evaluation system 206 of FIG. 2) may retrieve the same prompt template used to fine-tune the model. For example, the prompt template "LLM_CREDIT" may be retrieved to evaluate the model that was fine-tuned in FIG. 8 using "LLM_CREDIT". In this example, the prompt template may be retrieved from the same database (e.g., prompt database 214 of FIG. 2) during training and evaluation. By virtue of retrieving the prompt template from the same database, possible inconsistencies between the prompt template used during fine-tuning and evaluation may be reduced. If the prompt templates were pulled from different databases, updates to the prompt template in one database may not be carried over to the other. This may result in slight differences between two versions of a prompt template that could have a substantial impact on the results generated by the model.

The request may also include an indication of or one more evaluation metrics (e.g., "Evaluation Metric 1" of FIG. 5). In some examples, the system may display several different options for possible evaluation metrics. In an example, the evaluation metrics may use evaluation models. In this example, the evaluation models may generate an output (e.g., numerical score) based on comparing a response generated by the fine-tuned model based on a query and the ideal response corresponding to the query. One or more of the evaluation metrics may use an evaluation model from an open source artificial intelligence platform. As an example, the Recall-Oriented Understudy for Gisting Evaluation (ROUGE) model is an open-source model that may be used as an evaluation model for an evaluation metric. Based on comparing an output from the fine-tuned model and an associated ideal response, the ROUGE model may generate a score based on similarity determined from overlap of n-grams. The system described herein may incorporate open-source models such as ROUGE as possible options for evaluation metrics. While these models are well-known, there is currently a lack of systems that incorporate these models in an easy-to-use pipeline for SFT execution and evaluation. The systems described herein can incorporate the evaluation models into a system that is straightforward, as users may submit the request via a GUI, and minimizes unintended discrepancies in the selections associated with the request. In regards to the evaluation models, the system ensures that users are accessing the same versions of models. For example, there are many different versions of ROUGE available (E.g., ROUGE-A, ROUGE-B, and/or the like). Furthermore, the evaluation models are artificial intelligence models, and as such can have different hyperparameters. For example, ROUGE may have hyperparameters such as the n-gram size, length normalization factor, and/or the like. The described variations may have a significant impact on the output. Therefore, evaluations with different versions of a model may lack utility due to their lack of comparability. The described system provides the benefit of ensuring the same version of the evaluations models are used for each evaluation models. In some examples, the system may provide additional benefits, such as faster load times due to directly importing the open-source metrics and allowing users to remotely access the open-source metrics.

In the described example, the fine-tuned model may generate output based on the prompt template "LLM_CREDIT" and the test data set. Based on the context included in the test data set, the fine-tuned model may generate context. For example, based on terms and conditions documentation related to the credit card and the query "What is the charge for a foreign transaction?", the fine-tuned model may generate "1% fee for foreign transactions" as context. In an example wherein the model includes an LLM and a RAG model, the RAG model may generate the context and the LLM may generate the output. In the described example, the prompt may be generated based on inserting the query "What is the charge for a foreign transaction?" and the context "1% fee for foreign transactions" into the "LLM_CREDIT" prompt template. Based on the prompt, the fine-tuned model may generate an output including the text: "Hello. There is a 1% fee for foreign transactions." This process may be repeated for every evaluation sample in the evaluation sample data set.

In some embodiments, the one or more evaluation metrics may be used to evaluate the set of outputs from the fine-tuned model. As discussed above, evaluation models may be used to generate evaluation metric scores. In some examples, models may evaluate similarity of the output and the ideal response via methods such as word embeddings and n-grams. Some models may compare the outputs and their associated contexts to evaluate accuracy. In some examples, a single evaluation metric score may be generated for a set of outputs. In the described embodiments, a ROUGE score may be generated for each output in the set of outputs. In this example, the evaluation metric score for the ROUGE model may be an average of the ROUGE scores for the set of outputs. In examples wherein the user has selected multiple evaluation metrics, the overall model performance score may be based on the evaluation metric scores associated with the evaluation metrics. For example, the model performance score may be a weighted average of the evaluation metric scores, wherein the weights are decided (e.g., by the evaluation system or the user) based on what is most important to the computing task.

The evaluation metric scores and overall performance score may be used to evaluate and compare many different models. For example, as shown in FIG. 6B, two different versions of the same model may be compared (e.g., "version 1" and "version 2"). In this example, the different versions may be the product of different execution of the SFT process. For example, one version may not be fine-tuned while the other is, different training data sets may be used to execute the SFT process on the two versions, and/or the like. The evaluation results, including the evaluation metrics, overall performance, and associated selections, may be stored in a data management platform (e.g., Rubicon) so that users may view and compare the results of others. By virtue of storing evaluation results and associated selections, the system may prevent users from repeating a request that another user has already executed and evaluated, thereby increasing the efficiency of the SFT process. Furthermore, storing the evaluation results may enable users to repeat a past request and/or the request of other users.

It is contemplated that the steps or descriptions of FIGS. 8-10 may be used with any other embodiment of this disclosure. In addition, the steps and descriptions described in relation to FIGS. 8-10 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in any of FIGS. 8-10.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
A1. A method for facilitating supervised fine-tuning training and evaluation of large language models using a prompt library servicing the supervised fine-tuning training and the evaluation of the large language models.
A2. The method of embodiment A1, comprising: receiving a request to (i) execute a supervised fine tuning (SFT) process to train a large language model to perform a computing task when deployed and (ii) evaluate a performance of the large language model after execution of the SFT process, wherein the request indicates (a) a training data set to be used for the SFT process, (b) a test data set to be used to evaluate the performance of the large language model, and (c) a set of evaluation metrics to evaluate the performance of the large language model after the SFT process has been executed; executing, using the training data set and a prompt template selected based on the large language model and the computing task, the SFT process to obtain a trained large language model; evaluating, using the test data set and the prompt template, the set of evaluation metrics to obtain a set of evaluation metric scores; and causing a graphical user interface comprising the set of evaluation metric scores to be displayed.
A3. The method of embodiment A2, further comprising: receiving the training data set to be used for the SFT process including training sample contexts, training sample queries, and training reference results; and receiving the test data set to be used to evaluate the performance of the large language model including evaluation sample queries, evaluation reference results, and evaluation metadata.
A4. The method of any one of embodiments A2-A3, further comprising: inputting the training sample contexts and training sample queries to the large language model to obtain training sample results; and adjusting parameters of the large language model based on the training sample results and the training reference results.
A5. The method of any one of embodiments A2-A4, further comprising: generating context based on the evaluation metadata by searching a database for relevant documentation based on the evaluation metadata; and obtaining evaluation sample results based on the context, the evaluation sample queries, and the prompt template, wherein the set of evaluation metrics are evaluated by comparing the evaluation sample results to the evaluation reference results.
A6. The method of any one of embodiments A2-A5, further comprising: selecting the set of evaluation metrics based on the computing task.
A7. The method of any one of embodiments A2-A6, further comprising: receiving, from a client device, text strings indicating the training data set, the test data set, and the set of evaluation metrics.
A8. The method of any one of embodiments A2-A7, further comprising: causing the graphical user interface to display one or more training data sets, one or more test data sets, and one or more evaluation metrics, wherein the request comprises a selection of the training data, the test data set, and the set of evaluation metrics from the one or more training data sets, the one or more test data sets, and the one or more evaluation metrics, respectively.
A9. The method of any one of embodiments A2-A8, further comprising: receiving an indication of an initial set of parameters, wherein the initial set of parameters are adjusted based on training sample results and training reference results.
A10. The method of any one of embodiments A2-A9, further comprising: receiving an indication of a set of parameter ranges for a set of parameters of the trained large language model.
A11. The method of any one of embodiments A2-A10, further comprising: selecting, based on the request, the prompt template from a plurality of prompt templates, wherein the plurality of prompt templates are stored in a prompt database with prompt metadata.
A12. The method of any one of embodiments A2-A11, further comprising: extracting, from a second request received prior to the first request, a model identifier of the large language model and a description of a computing task to be performed by the large language model; generating, based on the model identifier and the description, (i) the prompt template and (ii) prompt metadata associated with the prompt template; and updating a plurality of prompt templates stored by a prompt database to include the prompt template and the prompt metadata.
A13. The method of any one of embodiments A2-A12, further comprising: generating, using an embedding model, sample embeddings representing evaluation sample results and reference embeddings representing evaluation reference results; computing, using the embedding model, distance metrics based on the sample embeddings and the reference embeddings, wherein the distance metrics indicate how similar the evaluation sample results are to the evaluation reference results; and evaluating an evaluation metric of the set of evaluation metrics based on the distance metrics.
A14. The method of any one of embodiments A2-A13, further comprising: receiving a request to (i) execute a supervised fine tuning (SFT) process to train a large language model to perform a computing task when deployed and (ii) evaluate a performance of the large language model after execution of the SFT process, wherein the request indicates (a) a training data set to be used for the SFT process, (b) a test data set to be used to evaluate the performance of the large language model, and (c) a set of evaluation metrics to evaluate the performance of the large language model after the SFT process has been executed; executing, using the training data set and a prompt template selected based on the large language model and the computing task, the SFT process to the large language model to obtain a trained large language model; evaluating, using the test data set and the set of evaluation metrics, the trained large language model to obtain a set of evaluation metric scores; and causing a graphical user interface comprising the set of evaluation metric scores to be displayed.
A15. A method comprising: receiving a request to (i) execute a supervised fine tuning (SFT) process to train a large language model to perform a computing task when deployed and (ii) evaluate a performance of the large language model after execution of the SFT process, wherein the request indicates (a) a training data set to be used for the SFT process including training sample queries, training sample contexts, and training reference results, (b) a test data set to be used to evaluate the performance of the large language model including evaluation sample queries, evaluation metadata, and evaluation reference results, and (c) a set of evaluation metrics to evaluate the performance of the large language model after the SFT process has been executed, wherein each evaluation metric of the set of evaluation metrics is selected based on the computing task that the large language model is to perform; executing, using the training data set and a prompt template selected from the plurality of prompt templates based on the large language model and the computing task, the SFT process to obtain a trained large language model, wherein the training sample contexts and training sample queries are input to the large language model to obtain training sample results, and parameters of the large language model are adjusted based on the training sample results and the training reference results; and evaluating, using the test data set, the set of evaluation metrics to obtain a set of evaluation metric scores, wherein context generated based on the evaluation metadata is inserted into the prompt template with the evaluation sample queries to obtain evaluation sample results, and wherein each evaluation metric score of the set of evaluation metric scores indicates how well the large language model performed the computing task based on the evaluation sample results and the evaluation reference results; and displaying a graphical user interface comprising the set of evaluation metric scores and one or more historical evaluation metric scores associated with one or more other trained large language models of the plurality of large language models.
B1. A method for managing prompts used for executing supervised fine-tuning (SFT) processes and evaluation of large language models by implementing a universal prompt database accessed during the execution of the SFT process and the evaluation of large language models.
B2. The method of embodiment 1, comprising: receiving a first request to execute a supervised fine-tuning (SFT) process to train and evaluate a first instance of a large language model to perform a first computing task; extracting, from the first request, a model identifier of the large language model and a first description of the first computing task to be performed by the first instance of the large language model; generating (i) a candidate prompt template and (ii) candidate prompt metadata associated with the candidate prompt template, including a candidate prompt name, the model identifier, and the first description; updating a prompt database storing a plurality of prompt templates to include the candidate prompt template and the candidate prompt metadata; receiving a second request to execute the SFT process to train and evaluate a second instance of the large language model, wherein the second request includes (a) the candidate prompt name, (b) a training data set, (c) a test data set, and (d) a set of evaluation metrics; executing, using the training data set and the candidate prompt template, the SFT process to train the second instance of the large language model to obtain a trained first large language model; and evaluating, using the test data set, the candidate prompt template, and the set of evaluation metrics, the trained first large language model.
B3. The method of embodiment 2, further comprising: populating a data structure representing the candidate prompt template, wherein data fields of the data structure are populated with the candidate prompt metadata.
B4. The method of any one of embodiments 2-3, further comprising: parsing the first request to identify the model identifier and the first description, wherein the first description comprises natural language text describing the first computing task; and inserting one or more token fields into the first description to populate with at least one of a query or context relating to the query.
B5. The method of any one of embodiments 2-4, further comprising: adding the candidate prompt template and the candidate prompt metadata to the prompt database, wherein the candidate prompt template and the candidate prompt metadata are stored as flat text strings within the prompt database.
B6. The method of any one of embodiments 2-5, further comprising: generating and providing a graphical user interface to a client device; and detecting, via the graphical user interface, an input of the candidate prompt name, the training data set, the test data set, and the set of evaluation metrics.
B7. The method of any one of embodiments 2-6, further comprising: detecting, via the graphical user interface, a first input comprising the candidate prompt name; and providing, within the graphical user interface, a recommendation of at least one of the training data set, the test data set, or the set of evaluation metrics based on the first input, wherein a second input indicating the training data set, the test data set, and the set of evaluation metrics is detected via the graphical user interface based on the recommendation.
B8 The method of any one of embodiments 2-7, further comprising: determining, using a prompt recommendation model, one or more previously used candidate prompt names, training data sets, test data sets, and evaluation metrics, wherein the input of the candidate prompt name, the training data set, the test data set, and the set of evaluation metrics is based on the one or more previously used candidate prompt names, training data sets, test data sets, and evaluation metrics.
B9. The method of any one of embodiments 2-8, further comprising: extracting model creation information from the first request; and storing, in the prompt database, the model creation information as additional prompt metadata with the candidate prompt template.
B10. The method of any one of embodiments 2-9, wherein the second request is received subsequent to the plurality of prompt templates stored by the prompt database being updated to include the candidate prompt template and the candidate prompt metadata.
B11. The method of any one of embodiments 2-10, further comprising: determining, from the second request, a first resource identifier of the training data set in a training data database and a second resource identifier of the test data set in a test database; and retrieving the training data set from a training data database based on the first resource identifier and the test data set from a test data database based on the second resource identifier.
B12. The method of any one of embodiments 2-1, wherein the training data set comprises a plurality of training samples to be used with the candidate prompt template to execute the SFT process for the second instance of the large language model, wherein each training sample of the plurality of training samples comprises a sample training query, sample training context, and a reference training result, executing the SFT process comprises: for each training sample of the plurality of training samples: generating a sample training prompt incorporating the sample training query and the sample training context into the candidate prompt template; inputting the sample training prompt into the second instance of the large language model to obtain a sample training result; and adjusting one or more parameters of the second instance of the large language model based on the reference training result associated with the training sample and the sample training result.
B13. The method of any one of embodiments 2-12, further comprising: steps for optimizing the second instance of the large language model to reduce discrepancies between the reference training result associated with the training sample and the sample training result.
B14. The method of any one of embodiments 2-13, wherein the test data set comprises a plurality of evaluation samples to be used to evaluate the SFT process executed for the second instance of the first large language model, wherein each of the plurality of evaluation samples comprise a sample evaluation query, sample evaluation metadata related to evaluation context associated with the sample evaluation query, and a reference evaluation result predetermined for the sample evaluation query, wherein evaluating the candidate prompt template further comprising: for each evaluation sample of the plurality of evaluation samples: generating a sample prompt incorporating, into the candidate prompt template, the sample evaluation query context generated based on the sample evaluation metadata; and inputting the sample prompt into the trained first large language model subsequent to execution of the SFT process to obtain a sample evaluation result.
B15. The method of any one of embodiments 2-14, further comprising: computing, using the set of evaluation metrics, a performance of the trained first large language model based on the sample evaluation result and the reference evaluation result associated with each evaluation sample of the plurality of evaluation samples.
B16. The method of any one of embodiments 2-15, further comprising: determining a set of evaluation metric scores corresponding to the set of evaluation metrics based on the test data set and the candidate prompt template.
B17. The method of any one of embodiments 2-16, further comprising: storing the trained first large language model for deployment based on the set of evaluation metric scores satisfying a threshold model performance condition.
B18. The method of any one of embodiments 2-17, further comprising: determining that the set of evaluation metric scores fails to satisfy a threshold model performance condition; and retrieving additional training data sets to execute an additional SFT process to the second instance of the large language model.
B19. The method of any one of embodiments 2-18, further comprising: generating a graphical user interface comprising a set of evaluation metric scores related to the set of evaluation metrics evaluated for the trained first large language model.
C1. A method for evaluating a supervised fine tuning training process performed on a large language model to train the large language model to execute a specific computing task using a universal prompt library for prompt engineering during training and evaluation of the large language model.
C2. The method of embodiment 1, comprising: receiving a request to evaluate a performance of a trained large language model to execute a computing task, wherein the request comprises a plurality of evaluation samples and an evaluation metric to use to evaluate the performance of the trained large language model, wherein each evaluation sample comprises a sample evaluation query, sample evaluation metadata related to evaluation context associated with the sample evaluation query, and a reference evaluation result predetermined for the sample evaluation query; retrieving, based on the request, a prompt template comprising a query field and a context field; for each evaluation sample of the plurality of evaluation samples: generating a sample prompt incorporating the sample evaluation query of the evaluation sample into the query field and context generated based on the sample evaluation metadata into the context field; inputting the sample prompt into the trained large language model to obtain a sample evaluation result; and determining, using the evaluation metric, an evaluation metric score based on the sample evaluation result and the reference evaluation result associated with the evaluation sample; and generating a model performance score based on the evaluation metric score determined for each evaluation sample of the plurality of evaluation samples.
C3. The method of embodiment 2, further comprising: determining, based on the request, a prompt name of a first prompt template used to train the trained large language model; and selecting the first prompt template from a plurality of prompt templates stored by a prompt database based on the prompt name, wherein the prompt template retrieved comprises the first prompt template.
C4. The method of any one of embodiments 2-3, further comprising: receiving user evaluation data related to a plurality of evaluation metrics, wherein the user evaluation data indicates a performance of each evaluation metric of the plurality of evaluation metrics based on user-provided evaluations; and selecting the evaluation metric based the user-provided evaluations.
C5. The method of any one of embodiments 2-4, further comprising: retrieving, based on the sample evaluation metadata, the context to incorporate into the sample prompt.
C6. The method of any one of embodiments 2-5, further comprising: generating a first embedding representing the sample evaluation result; generating a second embedding representing the reference evaluation result; and computing a similarity score using the first embedding and the second embedding, wherein the evaluation metric score comprises the similarity score.
C7. The method of any one of embodiments 2-6, wherein the reference evaluation result comprises a pre-generated result associated with a human-generated ideal result, determining the evaluation metric score further comprising: calculating a similarity of the human-generated ideal result to the sample evaluation result to determine the evaluation metric score.
C8. The method of any one of embodiments 2-7, further comprising: determining, based on the request, a model type of the trained large language model to be evaluated; and selecting the evaluation metric based on the model type.
C9. The method of any one of embodiments 2-8, further comprising: determining, based on the request, a prompt name associated with the prompt template; and selecting, from a prompt database storing a plurality of prompt templates, the prompt template based on the prompt name.
C10. The method of any one of embodiments 2-9, further comprising: computing, using a hallucination model, a model hallucination score for the sample evaluation result, wherein the evaluation metric score is determined based on the model hallucination score.
C11. The method of any one of embodiments 2-10, further comprising: wherein the prompt template comprises a first prompt template and the model performance score comprises a first model performance score, the method further comprises: selecting a second prompt template, wherein the first prompt template and the second prompt template are associated with the trained large language model; for each evaluation sample of the plurality of evaluation samples: generating a second sample prompt incorporating the sample evaluation query and the context into the second prompt template; inputting the second sample prompt into the trained large language model to obtain a second sample evaluation result; and determining, using the evaluation metric, a second evaluation metric score based on the second sample evaluation result and the reference evaluation result associated with the evaluation sample; and generating a second model performance score based on the second evaluation metric score determined for each evaluation sample of the plurality of evaluation samples.
C12. The method of any one of embodiments 2-11, further comprising: generating a graphical user interface to display via a client device, wherein the graphical user interface presents the first model performance score associated with the first prompt template and the second model performance score associated with the second prompt template.
C13. The method of any one of embodiments 2-12, wherein the evaluation metric comprises a first evaluation metric, the evaluation metric score comprises a first evaluation metric score, and the model performance score comprises a first model performance score, the method further comprising: for each evaluation sample of the plurality of evaluation samples: determining, using a second evaluation metric, a second evaluation metric score based on the sample evaluation result and the reference evaluation result associated with the evaluation sample; and generating a second model performance score based on the second evaluation metric score determined for each evaluation sample of the plurality of evaluation samples.
C14. The method of any one of embodiments 2-13, further comprising: generating a graphical user interface to display via a client device, wherein the graphical user interface presents the first model performance score associated with the first evaluation metric and the second model performance score associated with the second evaluation metric.
C15. The method of any one of embodiments 2-14, further comprising: determining the evaluation metric based on the trained large language model.
C16. The method of any one of embodiments 2-15, further comprising: determining, using a recommendation model, a recommendation of one or more evaluation metrics to use to evaluate the trained large language model based on the request, wherein the one or more evaluation metrics includes the evaluation metric, and wherein the evaluation metric is selected based on the recommendation of the one or more evaluation metrics; and generating a graphical user interface for display via a client device, the graphical user interface comprising the recommendation of the one or more evaluation metrics; and detecting, via the graphical user interface, a selection of the evaluation metric from the recommendation of the one or more evaluation metrics.
C17. The method of any one of embodiments 2-16, further comprising: determining that the model performance score satisfies a threshold model performance condition; and generating an instruction to at least one of: deploy the trained large language model or store the trained large language model for future deployment.
C18. The method of any one of embodiments 2-17, further comprising: determining that the model performance score fails to satisfy a threshold model performance condition; and generating an instruction to re-train the trained large language model using a different training data set.
C19. The method of any one of embodiments 2-18, wherein the request further comprises a training data set to be used to train a large language model, the method further comprising: prior to generating the sample prompt, training the large language model to obtain the trained large language model using the training data set and the prompt template.
D1. One or more non-transitory, computer-readable mediums storing instructions that, when executed by a data processing apparatus, cause the data processing apparatus to perform operations comprising those of any of embodiments A1-15, B1-B19, or C1-C19.
D2. A system comprising one or more processors; and memory storing instructions that, when executed by the processors, cause the processors to effectuate operations comprising those of any of embodiments A1-15, B1-B19, or C1-C19.
D3. A system comprising means for performing any of embodiments A1-15, B1-B19, or C1-C19.

## Claims

1. A system for managing prompts used for executing supervised fine tuning (SFT) processes and evaluation of large language models by implementing a universal prompt database accessed during execution of the SFT process and the evaluation of large language models, comprising:
cloud-based memory configured to store a prompt database comprising a plurality of prompt templates and prompt metadata, wherein each prompt template of the plurality of prompt templates includes a prompt name used to call the prompt template and a prompt description of a computing task to be performed by a large language model;
cloud-based control circuitry configured to:
receive a first request to execute a supervised fine tuning (SFT) process to train and evaluate a first instance of a first large language model to perform a first computing task;
extract, from the first request, a model identifier of the first large language model and a first description of the first computing task to be performed by the first instance of the first large language model after the SFT process has been executed;
generate (i) a candidate prompt template to add to the plurality of prompt templates stored by the prompt database and (ii) candidate prompt metadata associated with the candidate prompt template including a candidate prompt name, the model identifier, and the first description;
update the plurality of prompt templates stored by the prompt database to include the candidate prompt template and the candidate prompt metadata;
receive a second request to execute the SFT process to train and evaluate a second instance of the first large language model to perform a second computing task, wherein the second request includes (a) the candidate prompt name, (b) a training data set comprising a plurality of training samples to be used with the candidate prompt template to execute the SFT process for the second instance of the first large language model, (c) a test data set comprising a plurality of testing samples and a set of evaluation metrics to be used with the candidate prompt template to evaluate a performance of the second instance of the first large language model after execution of the SFT process; and
execute the SFT process to train the second instance of the first large language model using the training data set and the candidate prompt template to obtain a trained first large language model; and
cloud-based I/O circuitry configured to display a set of evaluation result metrics associated with the set of evaluation metrics determined using the trained first large language model and the training data set.

2. A method, implemented using one or more processors of a computing system, comprising:
receiving a first request to execute a supervised fine tuning (SFT) process to train and evaluate a first instance of a large language model to perform a first computing task;
extracting, from the first request, a model identifier of the large language model and a first description of the first computing task to be performed by the first instance of the large language model;
generating (i) a candidate prompt template and (ii) candidate prompt metadata associated with the candidate prompt template including a candidate prompt name, the model identifier, and the first description;
updating a prompt database storing a plurality of prompt templates to include the candidate prompt template and the candidate prompt metadata;
receiving a second request to execute the SFT process to train and evaluate a second instance of the large language model, wherein the second request includes (a) the candidate prompt name, (b) a training data set, (c) a test data set, and (d) a set of evaluation metrics;
executing, using the training data set and the candidate prompt template, the SFT process to train the second instance of the large language model to obtain a trained first large language model; and
evaluating, using the test data set, the candidate prompt template, and the set of evaluation metrics, the trained first large language model.

3. The method of claim 2, wherein generating the candidate prompt template comprises:
populating a data structure representing the candidate prompt template, wherein data fields of the data structure are populated with the candidate prompt metadata.

4. The method of claim 2 or 3, wherein extracting comprises:
(a) parsing the first request to identify the model identifier and the first description, wherein the first description comprises natural language text describing the first computing task; and inserting one or more tokens derived from the natural language text into the first description to populate the first description with at least one of a query or context relating to the query; and/or
(b) extracting model creation information from the first request; and storing, in the prompt database, the model creation information as additional prompt metadata with the candidate prompt template.

5. The method of any one of claims 2 to 4, wherein updating comprises:
adding the candidate prompt template and the candidate prompt metadata to the prompt database, wherein the candidate prompt template and the candidate prompt metadata are stored as flat text strings within the prompt database.

6. The method of any one of claims 2 to 5, further comprising:
generating and providing a graphical user interface to a client device; and
detecting, via the graphical user interface, an input of the candidate prompt name, the training data set, the test data set, and the set of evaluation metrics.
wherein, optionally:
(a) detecting the input comprises: detecting, via the graphical user interface, a first input comprising the candidate prompt name; and providing, within the graphical user interface, a recommendation of at least one of the training data set, the test data set, or the set of evaluation metrics based on the first input, wherein a second input indicating the training data set, the test data set, and the set of evaluation metrics is detected via the graphical user interface based on the recommendation; and/or
(b) the method further comprises: determining, using a prompt recommendation model, one or more previously used candidate prompt names, training data sets, test data sets, and evaluation metrics, wherein the input of the candidate prompt name, the training data set, the test data set, and the set of evaluation metrics is based on the one or more previously used candidate prompt names, training data sets, test data sets, and evaluation metrics.

7. The method of any one of claims 2 to 6, wherein the second request is received subsequent to the plurality of prompt templates stored by the prompt database being updated to include the candidate prompt template and the candidate prompt metadata.

8. The method of any one of claims 2 to 7, further comprising:
determining, from the second request, a first resource identifier of the training data set in a training data database and a second resource identifier of the test data set in a test database; and
retrieving the training data set from the training data database based on the first resource identifier and the test data set from the test data database based on the second resource identifier.

9. The method of any one of claims 2 to 8, wherein the training data set comprises a plurality of training samples to be used with the candidate prompt template to execute the SFT process for the second instance of the large language model, wherein each training sample of the plurality of training samples comprises a sample training query, sample training context, and a reference training result, executing the SFT process comprises:
for each training sample of the plurality of training samples:
generating a sample training prompt incorporating the sample training query and the sample training context into the candidate prompt template;
inputting the sample training prompt into the second instance of the large language model to obtain a sample training result; and
adjusting one or more parameters of the second instance of the large language model based on the reference training result associated with the training sample and the sample training result.

10. The method of claim 9, wherein adjusting the one or more parameters comprises:
steps for optimizing the second instance of the large language model to reduce discrepancies between the reference training result associated with the training sample and the sample training result.

11. The method of any one of claims 2 to 10, wherein the test data set comprises a plurality of evaluation samples to be used to evaluate the SFT process executed for the second instance of the first large language model, wherein each of the plurality of evaluation samples comprise a sample evaluation query, sample evaluation metadata related to evaluation context associated with the sample evaluation query, and a reference evaluation result predetermined for the sample evaluation query, wherein evaluating the candidate prompt template comprises:
for each evaluation sample of the plurality of evaluation samples:
generating a sample prompt incorporating, into the candidate prompt template, the sample evaluation query context generated based on the sample evaluation metadata; and
inputting the sample prompt into the trained first large language model subsequent to execution of the SFT process to obtain a sample evaluation result.

12. The method of claim 11, further comprising:
computing, using the set of evaluation metrics, a performance of trained first large language model based on the sample evaluation result and the reference evaluation result associated with each evaluation sample of the plurality of evaluation samples.

13. The method of any one of claims 2 to 12, wherein evaluating the trained first large language model comprises:
determining a set of evaluation metric scores corresponding to the set of evaluation metrics based on the test data set and the candidate prompt template;
wherein, optionally, the method further comprises:
(a) storing the trained first large language model for deployment based on the set of evaluation metric scores satisfying a threshold model performance condition; and/or
(b) determining that the set of evaluation metric scores fail to satisfy a threshold model performance condition; and retrieving additional training data sets to execute an additional SFT process to the second instance of the large language model.

14. The method of any one of claims 2 to 13, further comprising:
generating a graphical user interface comprising a set of evaluation metric scores related to the set of evaluation metrics evaluated for the trained first large language model.

15. One or more non-transitory computer-readable media storing computer program instructions that, when executed by one or more processors, effectuate operations comprising:
responsive to receiving a first request to execute a supervised fine tuning (SFT) process with a first instance of a large language model to perform a first computing task, generating, based on the first request, (i) a candidate prompt template and (ii) candidate prompt metadata associated with the candidate prompt template including a candidate prompt name;
updating, based on a plurality of prompt templates stored by a prompt database to include the candidate prompt template and the candidate prompt metadata; and
responsive to receiving a second request to execute the SFT process with a second instance of the large language model including the candidate prompt name, executing, using the candidate prompt template, the SFT process to train the second instance of the large language model to obtain a trained first large language model.
